# EUROPÄISCHE PATENTSCHRIFT

(11) **EP 0 628 124 B1**
(45) Veröffentlichungstag und Bekanntmachung des Hinweises auf die Patenterteilung: **21.02.2001**
(21) Anmeldenummer: 94901788.3
(22) Anmeldetag: 10.11.1993
(51) Int. Cl.: E04H 6/24

(54) **VORRICHTUNG ZUM SPEICHERN VON GEGENSTÄNDEN IN EINEM LAGERBLOCK**
DEVICE FOR STORING OBJECTS IN A STORAGE BLOCK
DISPOSITIF DE STOCKAGE D'OBJETS DANS UN BLOC D'ENTREPOSAGE

(30) Priorität: 12.11.1992 DE 4238239; 27.02.1993 DE 4306241
(43) Veröffentlichungstag der Anmeldung: 14.12.1994
(73) Patentinhaber: FM Patentverwertung KG, 84061 Ergoldsbach (DE)
(72) Erfinder: Faller, Alexander, 84061 Ergoldsbach (DE)
(74) Vertreter: Gustorf, Gerhard, Dipl.-Ing.
(86) Internationale Anmeldenummer: EP9303147
(87) Internationale Veröffentlichungsnummer: WO9411599

(56) Entgegenhaltungen:
- EP-A- 0 012 733
- WO-A-89/12152
- WO-A-93/09316
- DE-A- 1 559 158
- DE-A- 3 121 581
- DE-A- 3 304 932
- DE-B- 1 293 440
- FR-A- 2 207 841
- FR-A- 2 645 992
- FR-A- 2 673 923
- US-A- 3 091 188
- US-A- 3 662 905

## Beschreibung

Die Erfindung betrifft ein Verfahren und eine Vorrichtugn zum Speichern von Gegenständen nach den Oberbegriffen der Ansprüche 1 und 12.

Derartige Lagersysteme sind beispielsweise als Hochregallager bekannt, bei denen zu beiden Seiten einer Gasse neben- und übereinander angeordnete Stellplätze vorgesehen sind, was den Vorteil hat, daß jede einzelne Position einen direkten Zugriff ermöglicht. Es können allerdings nur soviele Positionen gleichzeitig bedient werden, wie Gassen vorhanden sind.

Weiterhin sind Schieberegale bekannt, die nur einen sehr geringen Platzbedarf haben, da nur eine einzige Gasse für den Zugriff benötigt wird, während die anderen Regaleinheiten zu einem nicht zugänglichen Block komprimiert werden. Das hat jedoch den Nachteil, daß sehr große Massen bewegt werden müssen, so daß sich eine sehr lange Zugriffszeit ergibt.

Durchlaufregale haben dem gegenüber eine sehr hohe Beschickungs-und Entnahmefrequenz, da der Zugriff über die gesamte Stirnseite möglich ist. Allerdings können nur gleiche Artikel in den einzelnen Regalschächten gelagert werden. Ein direkter Zugriff auf bestimmte Positionen ist nicht möglich, weil die Lagerung nach dem Prinzip "first in - first out" oder "last in - last out" erfolgt.

Gegenstand der DE-A 32 12 822 ist eine Parkvorrichtung für Kraftfahrzeuge, welche auf Paletten abgestellt und in Stellplätzen untergebracht werden. Die Stellplätzte sind in nur einer vertikalen Scheibe angeordnet, in der sie in Y- und Z-Richtung nebeneinander und übereinander zu einem Block zusammengefaßt sind. Vor diesem Block befindet sich ein seitlich verschiebbares Aufzugsorgan, mit dessen Hilfe das jeweils benötigte Fahrzeug auf der Palette entnommen wird bzw. eingestellt werden kann.

Eine Vorrichtung der angegebenen Gattung ist aus der WO 89/12152 bekannt. Bei dieser handelt es sich um ein Parkhaus mit wenigstens zwei Ebenen. Bei diesem Parksystem sind die Stellplätze ohne Zwischenräume in Y-Richtung nebeneinander und in X-Richtung hintereinander angeordnet, wodurch in X-Richtung aufeinander folgende Reihen (dort Zeilen Z genannt) und in Y-Richtung nebeneinander liegende Zeilen (dort Reihen R genannt) gebildet werden. Um die Funktion des Parksystems zu gewährleisten, ist in jeder Zeile mindestens ein Rangierplatz freizuhalten. Beim Füllen des Parkhauses werden die Fahrzeuge so eingefahren, daß eine Verdichtung in Richtung der Ausfahrreihe erfolgt, so daß bei vollem Parkhaus die letzte Reihe frei von Fahrzeugen ist. Diese freie Reihe soll somit Rangierbewegungen ermöglichen, wenn Fahrzeuge abgerufen werden sollen, die nicht in der vordersten Reihe stehen.

Das bekannte Parkhaus arbeitet im wesentlichen nach dem Prinzip first in - first out. Wenn - wie erläutert - vorzugsweise die letzte der quer zur Hauptdurchfahrrichtung liegende Reihe freigehalten ist, führt dieses Prinzip zu häufigen Rangierbewegungen, insbesondere dann, wenn wesentlich mehr Zeilen als Reihen vorhanden sind.

Die WO 89/12152 gibt keine Auskunft darüber, was mit den leeren Paleten geschieht. Aus der Beschreibung des Systems kann geschlossen werden, daß diese nach ihrem Freiwerden an den leeren Stellplätzen wieder einsortiert werden. Hinzu kommt, daß in jeder Zeile sowohl im Eingangsbereich als auch auf der Auslagerseite je ein Aufzugsorgan (Hubwerk) vorgesehen ist. Ferner muß jeder Stellplatz mit einer Mehrzahl von Hubvorrichtungen in Form hydraulischer Zylinder ausgerüstet sein, um alternativ die Antriebseinheiten zum Verschieben der Gegenstände in Y-Richtung oder die Antriebseinheiten zum Verschieben der Gegenstände in X-Richtung in die Arbeitsposition anzuheben.

Gegenstand der DE-A 33 04 932 ist ein Lagersystem nach Art eines Verschieberegals für eine Containerumschlaganlage oder eine Parkgarage. Auf den Seitenwänden des Gebäudes der Anlage ist die Kranbrücke eines Laufkrans verfahrbar, dessen Laufkatze die einzulagernden oder auszulagernden Gegenstände vertikal, danach horizontal und schließlich wieder vertikal transportiert. Die Stellplätze sind mit weiteren Antrieben untereinander verbunden und zur Bildung eines Schachtes in einer horizontalen Richtung auf Schienen beweglich gelagert.

Der Erfindung liegt die Aufgabe zugrunde, ein Lagersystem anzugeben, das die Vorteile der eingangs erläuterten Bautypen miteinander vereinigt, ohne dabei deren Nachteile in Kauf nehmen zu müssen. Mit anderen Worten soll ein Lagersystem geschaffen werden, das eine kompakte Bauweise gestattet und wenig Platz benötigt sowie einen schnellen und direkten Zugriff zu den einzelnen Stellplätzen mit einem Minimum an Rangierbewegungen ermöglicht, ohne daß beim Einstellen oder bei der Entnahme die übrigen Stellplätze blockiert werden.

Die Lösung dieser Aufgabe ergibt sich aus den Kennzeichen der Ansprüche 1 und 12.

Dadurch, daß im Gegensatz zum Stand der Technik die freien Stellplätze nicht in jeweils einer in Durchlaufrichtung verlaufenden Zeile liegen, sondern daß jede quer dazu verlaufende Reihe einen freien Stellplatz hat, der zum Ausweichen und Umrangieren frei bleibt, werden die unbedingt erforderlichen Rangierbewegungen auf ein Minimum begrenzt; ein Umrangieren der in jeder Reihe verbleibenden Fahrzeuge relativ zueinander entfällt vollständig. Ferner hat die Erfindung den Vorteil, daß es nicht unbedingt notwendig ist, in jeder Zeile des Lagerblocks ein Hubwerk vorzusehen; vielmehr würde es genügen, beispielsweise nur jede zweite Zeile mit einem Hubwerk auszurüsten.

Ein wesentlicher Vorteil gegenüber dem Stand der Technik wird ferner dadurch erzielt, daß die leeren Paletten ohne Einsortierung an einen freigewordenen Platz in die hierfür vorgesehene Zwischenebene des Lagerblocks eingelagert und von dort wieder in das System zurückgeführt werden können. In der Zwischenebene können die rücklaufenden Paletten ohne Beeinträchtigung des Betriebs gereinigt werden, beispielsweise nach einer bestimmten Zahl von Einsätzen oder in Abhängigkeit vom Verschmutzungsgrad.

Nicht zuletzt hat die Erfindung den weiteren Vorteil, daß dank der Vorschrift, in jeder Reihe einen freien Stellplatz vorzusehen, auch Lagerblöcke realisiert werden können, die keinen rechteckigen Grundriß haben, sondern beispielsweise einen dreieckigen Grundriß. Ein derartiger Grundriß würde bei einem Parkhaus nach der DE-C 38 23 728 die Notwendigkeit erfordern, alle freien Stellplätze auf der breitesten Reihe vorzusehen.

Die Erfindung ist für vielfältige Anwendungszwecke geeignet, insbesondere als Regalsystem, Containerlager oder Parkhaus.

Mit der Erfindung ist es möglich, die Stellplätze ohne Zwischenräume neben- bzw. hintereinander anzuordnen und in Weiterbildung an wenigstens einer Außenseite des Lagerblocks die Hubwerke anzuordnen. Daneben ist es selbstverständlich möglich, die Hubwerke auch innerhalb des Lagerblocks vorzusehen, wenn dies im Einzelfall gefordert wird.

Nach einem Merkmal der Erfindung ist der Lagerblock in Modulbauweise aus den Stellplätzen zusammengesetzt. Dies ermöglicht eine sehr rasche Montage entsprechend dem vorhandenen Platzbedarf und den jeweiligen Anforderungen, so daß beispielsweise bei Messen, Volksfesten oder anderen Großveranstaltungen innerhalb kürzester Zeit ein mobiles Parkhaus erstellt werden kann.

Der Zusammenbau und die Lagerhaltung werden dadurch weiter vereinfacht, daß jeder einzelne Stellplatz in Modulbauweise aus einem Grundelement mit Bodenrahmen und vertikalen Säulen sowie einem Verschiebemodul zusammengesetzt ist. Der Verschiebemodul enthält dabei sowohl die Antriebseinheit für die X-Richtung als auch die Antriebseinheit für die Y-Richtung und ist im allgemeinen in den Bodenrahmen eingesetzt.

Dabei ist es vorteilhaft, wenn jeder Stellplatz eine Trägerplatte aufweist, die auf dem Verschiebemodul aufliegt und durch diesen verschiebbar ist. Diese Bauweise eignet sich insbesondere für die Verwendung des Lagersystems als Parkhaus, so daß die eingestellten Fahrzeuge auf den Trägerplatten stehen. Die Trägerplatten können dabei so ausgebildet sein, daß sie Tropfwasser aufnehmen, wobei im untersten Bereich des Lagerblocks dann eine Wascheinrichtung vorgesehen sein kann.

Es ist besonders günstig, wenn der Verschiebemodul wenigstens eine Antriebseinheit zum Verschieben der Trägerplatte in X- bzw. in Y-Richtung aufweist, wobei die Antriebseinheit mit einem Zahnrad in Eingriff mit einer Zahnstange an der Unterseite der Trägerplatte ist. Auf diese Weise sind die beim Stand der Technik erforderlichen Hubvorrichtungen entbehrlich, weil die Zahneingriffe der nicht benötigten Antriebseinheiten durch die jeweils angesteuerten Antriebseinheiten automatisch ausgerückt werden.

Sofern das Lagersystem zur Aufnahme von Containern dient, sind die Antriebseinheiten zum Verschieben in X-Richtung im Bodenrahmen jedes einzelnen Stellplatzes untergebracht, während die Antriebseinheiten für die Y-Richtung von oben her auf den jeweiligen Container einwirken können.

Dabei kann so vorgegangen werden, daß jeder Stellplatz zur Aufnahme eines Containers einen Bodenrahmen hat, der über Laufrollen in Führungsschienen in Y-Richtung verschiebbar ist. Der Bodenrahmen kann über Antriebsspindeln mit der Antriebseinheit, beispielsweise ein Elektromotor, verbunden sein, die fest im Lagerblock angebracht ist und die Verschiebung um jeweils einen Stellplatz in Y-Richtung herbeiführt.

Die Antriebseinheiten zum Verschieben der Container in X-Richtung können als sogenannte Spreader mit einem Tragrahmen ausgebildet sein, der über antreibbare Laufrollen in Laufschienen verfahrbar ist und an seiner Unterseite wenigstens zwei vertikal verstellbare Traversen mit Greifelementen (Twistlocks) zum Erfassen der Gegenstände von oben trägt. Jede Ebene des Lagerblocks hat in jeder Zeile einen derartigen Spreader, der den gewünschten Container von oben greift, um ein kurzes Stück anhebt und in X-Richtung zwischen dem Eingangsbereich und der Auslagerseite verfährt.

Dabei ist es günstig, wenn der rechteckige Tragrahmen im Bereich seiner kurzen Außenseite zwei Traversen und im mittleren Bereich zwei weitere Traversen trägt. Auf diese Weise kann der Spreader entweder einen langen Container oder zwei kurze Container aufnehmen. Für die Aufnahme von Containern mit Zwischen- oder Übermaß können weitere Traversen vorgesehen sein.

Die Greifelemente sind vorzugsweise als um 90° verdrehbare Verriegelungsbolzen für den Eingriff in Aufnahmeöffnungen der Container ausgebildet. Die Container haben hierzu entsprechend ausgebildete Ecken (corner castings), die die Herstellung einer Renk- oder Bajonettverbindung mit den Verriegelungsbolzen ermöglichen.

Jedem Verriegelungsbolzen kann ein höhenbeweglicher Sicherungsstift zugeordnet sein, der beim Aufsitzen auf der Oberseite des Containers oder dergleichen, beispielsweise auf den corner castings, die Drehbewegung des Verriegelungsbolzens in seine Eingriffsstellung freigibt. Damit wird das fehlerfreie Einrasten der Twistlocks und ein Anheben des Containers erst nach der einwandfreien Verriegelung sichergestellt.

In Weiterbildung der Erfindung hat das Aufzugsorgan einen in einem Schacht vertikal verfahrbare, als Hubeinheit dienenden Rahmen mit zwei zueinander parallelen Laufschienen, in die der Tragrahmen eines Spreaders einfahren bzw. aus diesem herausfahren kann. Die Spreader der Hubwerke können auf diese Weise dieselbe Konstruktion und dieselben Abmessungen haben wie die im Lagerblock verfahrbaren Spreader (Systemspreader).

Die Hubeinheit kann im Aufzugsschacht über Kettentriebe, Spindeln oder hydraulische Einrichtungen verfahren werden.

Die Tragrahmen (Systemspreader) können mit einer hydraulischelektronischen Wiegeeinrichtung ausgerüstet sein, die an eine zentrale Steuerung angeschlossen werden kann. Die ermittelten Containergewichte werden an einen Rechner der zentralen Steuerung weitergeleitet, wo beispielsweise eine Gewichtsoptimierung bei der Beladung eines Schiffes vorgenommen werden kann.

Nach einem weiteren Merkmal der Erfindung ist vorgesehen, in dem Lagerblock einen verfahrbaren Feuerlösch-Container unterzubringen. Damit steht eine mobile Löscheinheit zur Verfügung, die eine direkte, halbautomatische Brandbekämpfung innerhalb des Lagerblocks ermöglicht. Die Löscheinheit kann als Wasser- oder Halonlöschanlage ausgeführt sein und gestattet die Bekämpfung eines Brandes im Inneren eines Containers mit Hilfe einer in diesen eindringenden Löschlanze.

Bei dem Lagersystem gemäß der Erfindung können auch die Hubwerke in vertikaler Richtung aus Schachtelementen in Modulbauweise zusammengesetzt sein. Dabei ist es günstig, wenn jedes Hubwerke an seinem oberen Ende eine Antriebseinheit für Förderketten und an seinem unteren Ende eine Umlenkeinheit für diese Förderketten aufweist.

Im allgemeinen wird es vorteilhaft sein, dem Hubwerk einen Bereitstellungsplatz mit Hubbühne zuzuordnen, insbesondere dann, wenn die Hubwerke an den beiden Stirnseiten des Lagerblocks vorgesehen sind. In diesem Falle bietet es sich an, die unterste Ebene des Lagerblocks für die Palettenrückführung auszunutzen, um beispielsweise bei einem Parkhaus die nicht mehr benötigten Paletten von der Ausfahrseite zum Einfahrbereich zurückzufördern. Zusätzlich ist es möglich, die unterste Ebene als Palettenmagazin zu verwenden.

Selbstverständlich besteht auch die Möglichkeit, die einzelnen Stationen nicht im Modulsystem aufzubauen, sondern beispielsweise in Schweiß- oder Schraubkonstruktionen zu errichten.

Die Erfindung ist nachstehend an Ausführungsbeispielen erläutert, die in der Zeichnung dargestellt sind. Es zeigen:
Figur 1 die schematische Ansicht eines Lagerblocks einer Vorrichtung gemäß der Erfindung,
Figur 2 eine schematische Draufsicht auf die oberste Ebene des Lagerblocks der Figur 1,
Figur 3 die schematische Ansicht eines nach dem erfindungsgemäßen Prinzip aufgebauten Parkhauses mit der Einfahrt an einer Stirnseite und der Ausfahrt an der anderen Stirnseite, Figur 4 eine Variante der Figur 3, bei der die Zufahrt von den Längsseiten her erfolgt,
Figur 5 eine weitere Variante der Figur 3, bei der die Ein- und Ausfahrt auf einer beliebigen Zwischenebene stattfindet,
Figur 6 die perspektivische Darstellung eines Teilbereiches der in Figur 3 gezeigten Variante in Modulbauweise,
Figur 7 eine Explosionsdarstellung eines Teils der in Figur 6 verwendeten Modulelemente,
Figur 8 eine vergrößerte Darstellung eines Grundelementes mit eingebautem Verschiebemodul,
Figur 9 eine vergrößerte Darstellung eines Teils eines Schachtelementes mit Förderketten für ein Hubwerk, Figur 10 die Ansicht eines Verschiebemoduls,

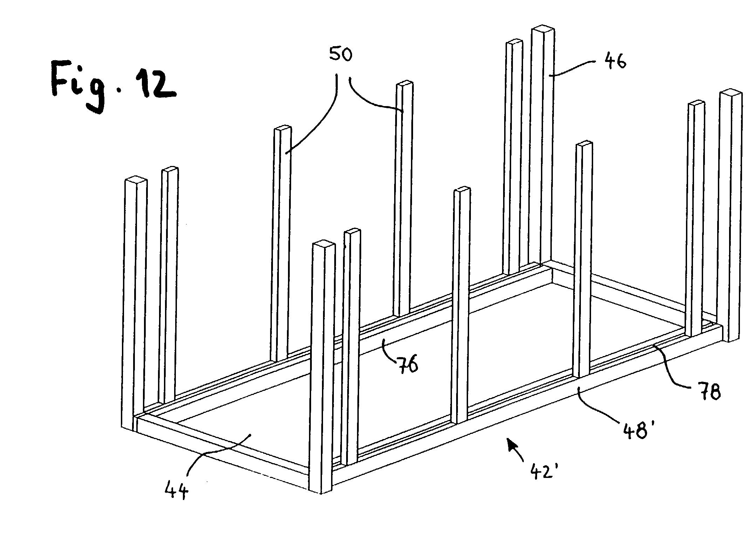

Figur 11 eine über dem Verschiebemodul liegende Trägerplatte,
Figur 12 die vergrößerte Ansicht eines untersten Schachtelementes des Hubwerks,
Figur 13 die perspektivische Darstellung einer Antriebseinheit für ein Hubwerk,
Figur 14 eine Umlenkeinheit eines Hubwerkes,
Figur 15 eine der Figur 6 entsprechende Darstellung des Betriebsablaufes in einem Parkhaus gemäß Figur 5,
Figur 16 eine Variante der Figur 15 mit Palettenpuffer,
Figur 17 das Parkhaus der Figur 3 in einer anderen Betriebsweise,
Figur 18 eine Variante der Figur 17,
Figur 19 eine Variante der Figur 5 mit alternierend angeordneten Hubwerken,
Figur 20 eine weitere Variante der Erfindung in Form eines Containerlagers,
Figur 21 eine vergrößerte Ansicht des Eingangsbereiches des Containerlagers,
Figur 22 die Ansicht einer Antriebseinheit (Spreader) zum Verschieben von Containern in X-Richtung,
Figur 23 die Ansicht einer Hubeinheit in einem Hubwerk,
Figur 24 die Teilansicht einer Traverse eines Spreaders in entriegelter Stellung des Greifelementes,
Figur 25 die Teilansicht der Traverse in Verriegelungsstellung des Greifelementes (Twistlock),
Figur 26 die perspektivische Darstellung einer Hubeinheit mit Spreader, eines Systemspreaders und eines Stellplatzes mit Bodenrahmen zum Verschieben der Container in Y-Richtung,
Figur 27 die Ansicht des Bodenrahmens der Figur 26,
Figur 28 die Draufsicht auf mehrere Bodenrahmen mit ihren Antriebseinheiten,
Figur 29 die Ansicht mehrerer, übereinander angeordneter Spreader mit daran hängenden Containern,
Figur 30 die Ansicht eines Knotenpunktes in dem Container und
Figur 31 ein Containerlager in einem Hafen.

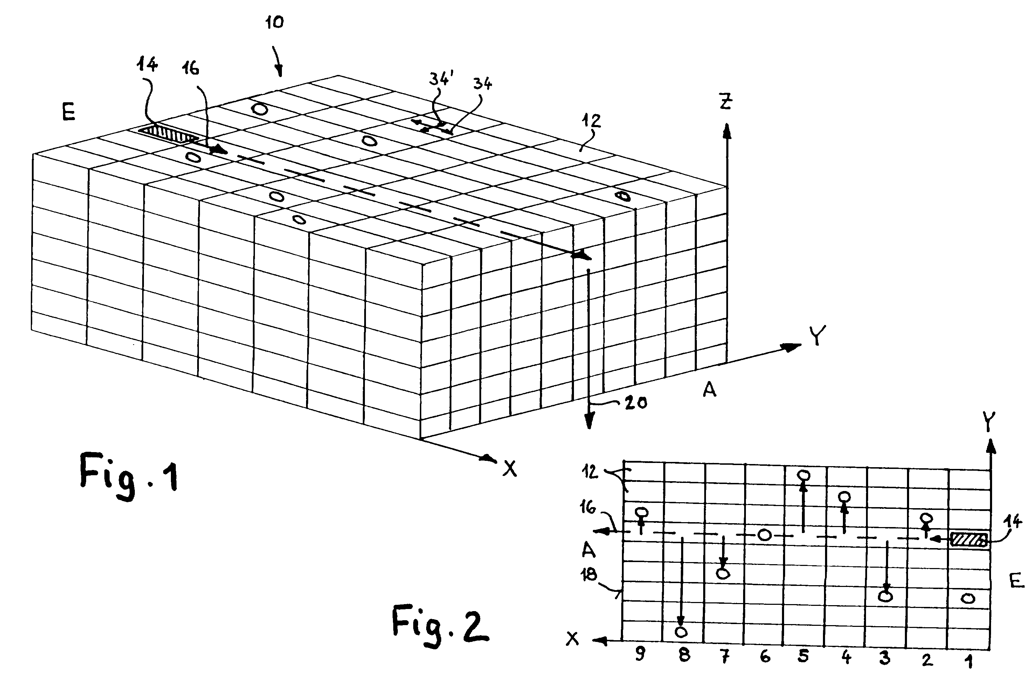

In Figur 1 ist schematisch ein Lagerblock 10 dargestellt, der zum Speichern von Gegenständen in kompakter Anordnung, z.B. Containern, Kraftfahrzeugen oder Behältern, Stellplätze 12 hat, die ohne Zwischenräume in X-, Y- und Z-Richtung hinter- bzw. nebenbzw. übereinander angeordnet sind. Figur 2 zeigt die schematische Draufsicht des Lagerblocks 10 der Figur 1, wobei angenommen ist, daß die mit einem Kreis gekennzeichneten Stellplätze 12 frei sind, während alle übrigen Stellplätze besetzt sind. Eingangs wurde bereits darauf hingewiesen, daß es vorteilhaft ist, in jeder Reihe (X-Richtung) einen Stellplatz 12 nicht zu besetzen, um das Einlagern bzw. die Entnahme von Gegenständen 14 zu erleichtern.

Wenn im Beispiel der Figuren 1 und 2 der mit 14 bezeichnete Gegenstand entnommen werden soll, was in X-Richtung erfolgt, d.h. von der hintersten bis zur vordersten Reihe hindurch, so muß in jeder Reihe lediglich maximal eine Verschiebung in der Weise stattfinden, daß in Richtung des eingezeichneten Pfeiles eine Gasse 16 gebildet wird. Im Ausführungsbeispiel werden somit die besetzten Stellplätze um die nachfolgend aufgeführten Einheiten in Y-Richtung zu dem unbesetzten Stellplatz hin (mit Kreis gekennzeichnet) verschoben:
Reihe 2 eine Einheit nach rechts
Reihe 3 drei Einheiten nach links
Reihe 4 zwei Einheiten nach rechts
Reihe 5 drei Einheiten nach rechts
Reihe 6 keine Verschiebung
Reihe 7 zwei Einheiten nach links
Reihe 8 fünf Einheiten nach links
Reihe 9 eine Einheit nach rechts.

Diese Verschiebungen in Y-Richtung können gleichzeitig erfolgen, so daß die Taktzeit sehr kurz ist, bis der Gegenstand 14, der sich in der hintersten Reihe befindet, in Richtung des Pfeiles durch die nun freie Gasse 16 zur Entnahme durchgeschoben werden kann. Auf der in Figur 2 linken Stirnseite 18 steht dann ein Hubwerk bereit, das in Figur 1 durch den Pfeil 20 angedeutet ist. Hier kann der gewünschte Gegenstand 14 nach unten abgesenkt und aus dem Lagerblock 10 entnommen werden.

Sobald der Gegenstand 14 um zwei Reihen vorgeschoben worden ist, kann ein weiterer Gegenstand aus der Reihe 1 entnommen werden, denn die Gegenstände, die diesem im Weg sind, können auf die soeben freigewordene Gasse 16 verschoben werden.

Die Einlagerung eines Gegenstandes, beispielsweise eines Kraftfahrzeuges in ein Parkhaus, geschieht in der umgekehrten Reihenfolge, d.h. auch hier werden die besetzten Stellplätze so geräumt, daß eine Gasse 16 gebildet werden kann, innerhalb der der Gegenstand zu einem freien Stellplatz gelangt.

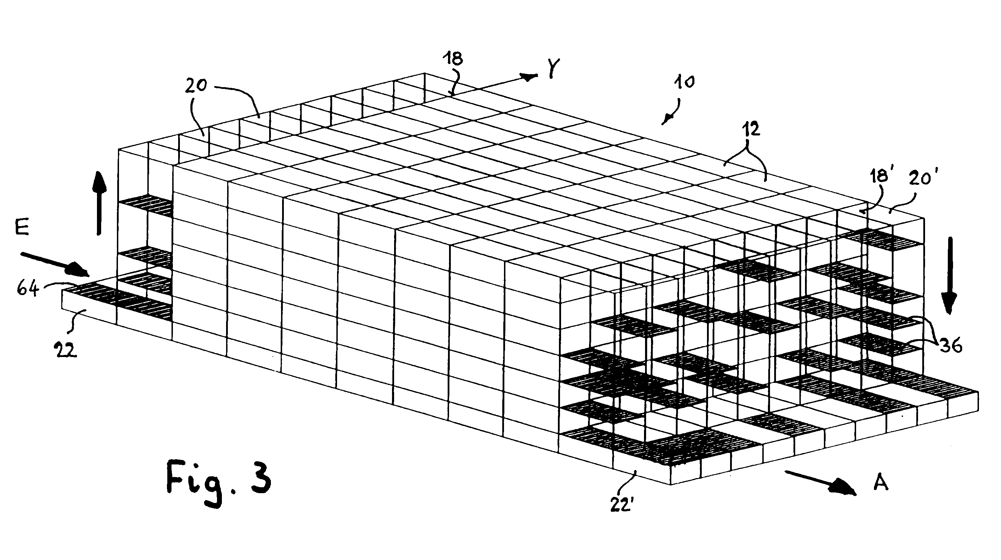

In Figur 3 ist eine mögliche Realisierung als Parkhaus dargestellt, wobei ersichtlich ist, daß dem Lagerblock an der linken Stirnseite 18 so viele Hubwerke 20 zum Einfahren zugeordnet sind, wie der Lagerblock 10 Zeilen (Y-Richtung) hat. Entsprechend sind der gegenüberliegenden Stirnseite 18' Hubwerke 20' vorgelagert, die zur Entnahme dienen.

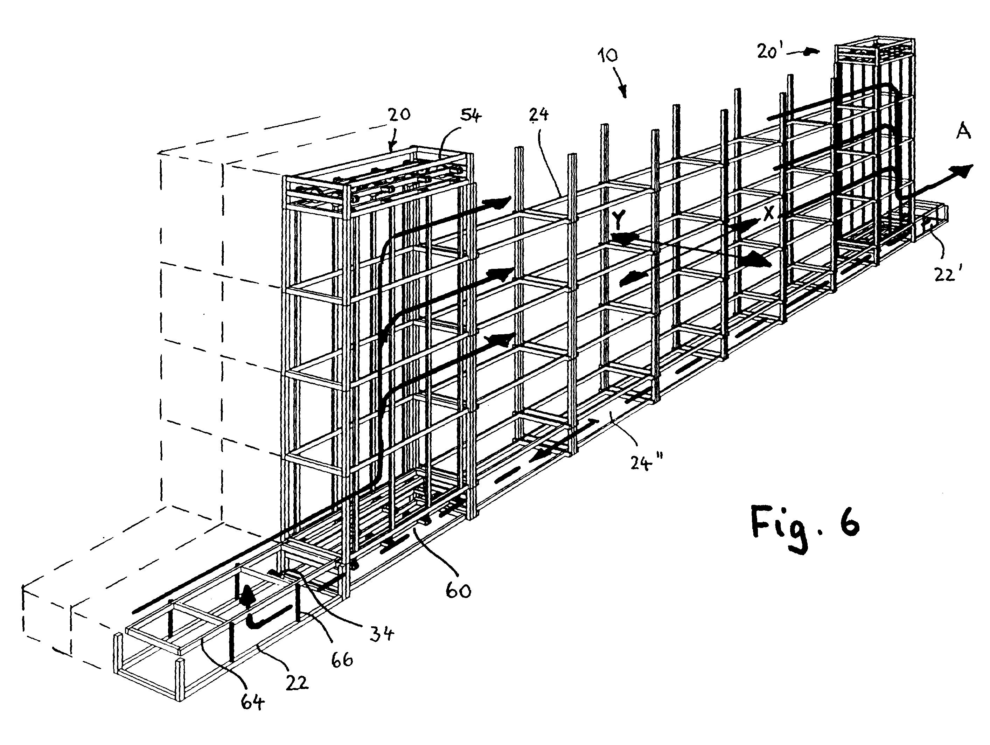

Wie Figur 3 ferner zeigt, befindet sich vor den Hubwerken 20 der Eingangsseite bzw. hinter den Hubwerken 20' der Ausgangsseite jeweils ein Bereitstellungsplatz 22 bzw. 22'. Hierauf wird bei der folgenden Beschreibung der Figur 6 näher eingegangen.

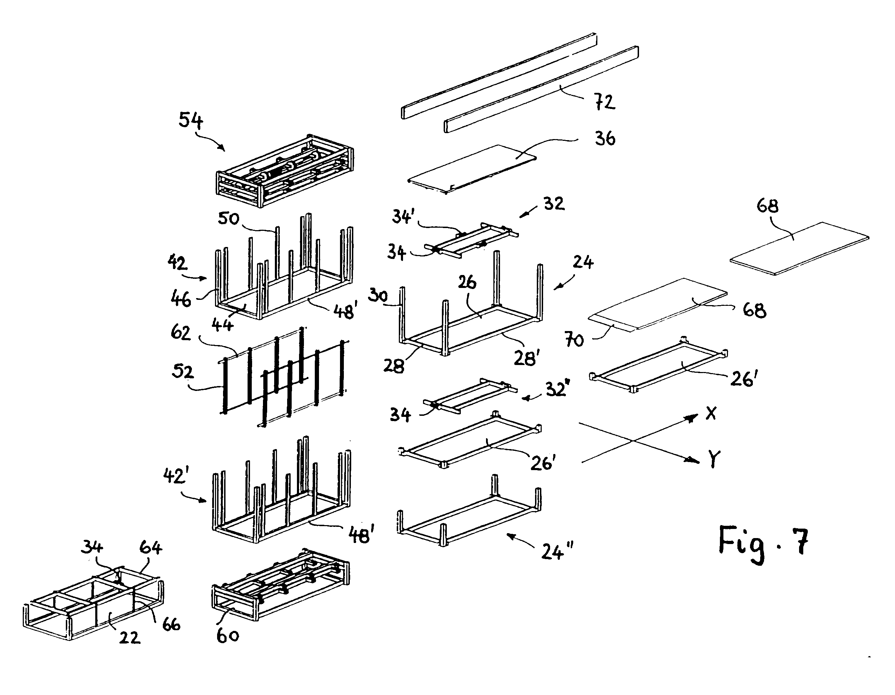

Figur 6 zeigt ausschnittsweise eine Zeile des in Figur 3 angedeuteten Parkhauses in Modulweise. Die einzelnen Elemente sind in Figur 7 in Explosionsdarstellung zu erkennen.

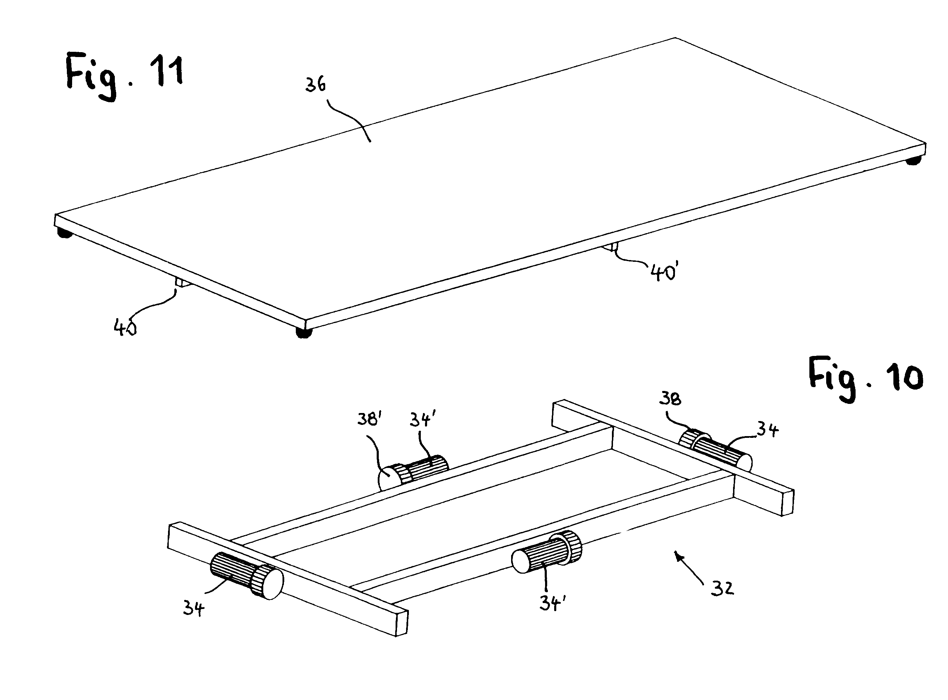

Der zentrale Lagerblock 10 setzt sich, wie bereits angegeben wurde, aus Stellplätzen 12 zusammen, die ohne Zwischenräume nebeneinander bzw. hintereinander und auch übereinander angeordnet sind. Jeder einzelne Stellplatz 12 besteht aus einem Grundelement, das in Figur 7 mit 24 bezeichnet ist. Dieses Grundelement 24 hat einen rechteckigen Bodenrahmen 26, der aus zwei kurzen Schienen 28 und zwei langen Schienen 28' besteht und von dessen Ecken vier vertikale Säulen 30 nach oben abstehen. Innerhalb des Grundrahmens 26 kann ein Verschiebemodul 32 (vgl. Figur 10) eingebaut werden, der an seinen Schmalseiten zwei einander gegenüberliegende Antriebseinheiten 34, z.B. Elektromotoren hat, die zur Längsverschiebung einer auf diesen aufliegenden Trägerplatte 36 dient, die an ihrer Unterseite entsprechende, mit Zahnrädern 38 der Antriebseinheiten 34 zusammenwirkende Eingriffselemente 40 hat, beispielsweise Zahnstangen. Rechtwinklig zu dieser Verschieberichtung in X-Richtung kann die Trägerplatte 36 auch in ihrer Querrichtung, d.h. in Y-Richtung verschoben werden, wozu der Verschiebemodul 32 an seinen einander gegenüberliegenden Längsseiten je eine Antriebseinheit 34' aufweist. Auch von diesen Antriebseinheiten 34' sind Zahnräder 38' in Eingriff mit entsprechenden Eingriffselementen 40', z.B. Zahnstangen, die an der Unterseite der Trägerplatte 36 angebracht sind.

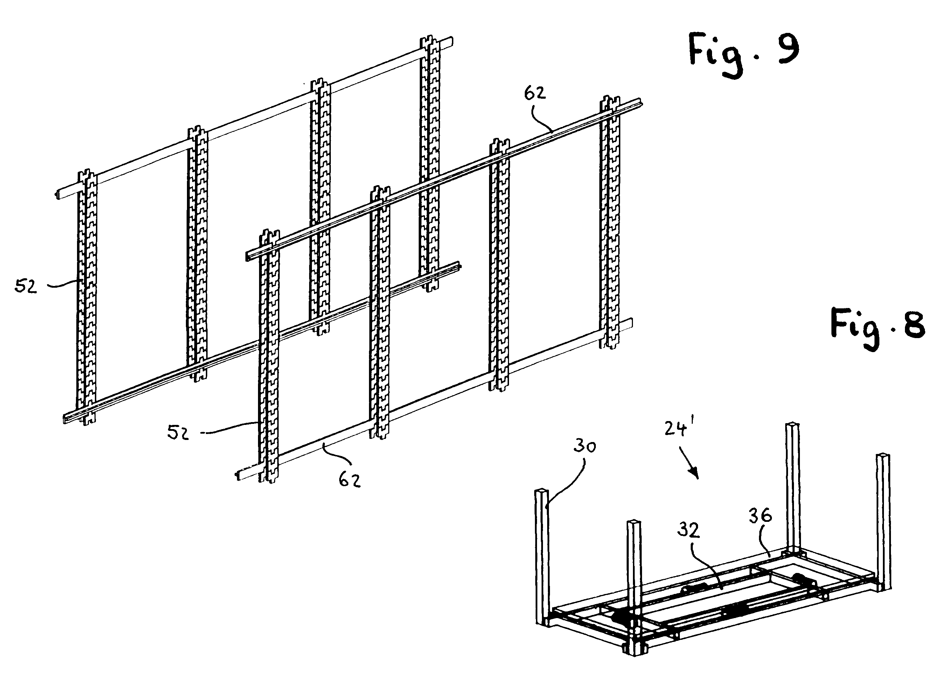

Figur 8 zeigt ein Grundelement 24', das bereits mit dem Verschiebemodul 32 und der Trägerplatte 36 ausgerüstet ist.

Aus Gründen der besseren Übersicht sind in Figur 6 lediglich die Grundelemente 24 für die einzelnen Stellplätze 12 gezeigt, während die Verschiebemodule 32 und die Trägerplatten 36 weggelassen sind. Der in Figur 6 vorderen Stirnseite des Lagerblocks 10 sind Hubwerke 20 vorgelagert, von denen in Figur 6 nur eines eingezeichnet ist, da die übrigen Zeilen (Y-Richtung) weggelassen bzw. nur angedeutet sind. Ein gleich ausgebildetes Hubwerk 20' schließt sich in Durchlaufrichtung an die hintere Stirnseite des Lagerblocks 10 an.

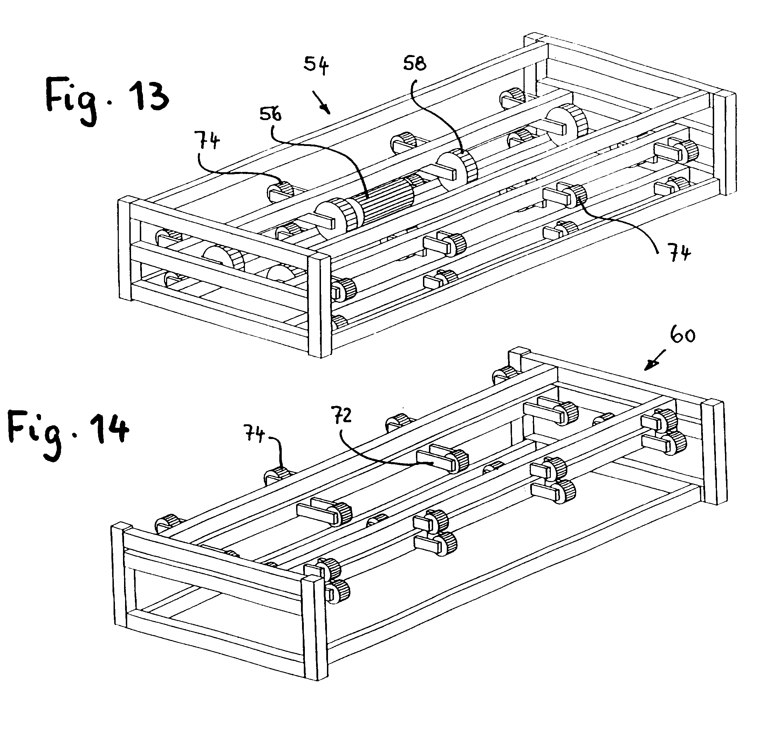

Jedes Hubwerk 20 ist in vertikaler Richtung in Modulbauweise aus untereinander gleichen Schachtelementen 42 zusammengesetzt, die in Figur 7 in Explosionsdarstellung zu erkennen sind. Jedes Schachtelement 42 hat einen rechteckigen Rahmen 44, von dessen vier Ecken je eine Säule 46 nach oben absteht. Die Länge der Säulen 46 entspricht der Länge der Säulen 30 der Grundelemente 28. Die Innenabmessungen des Rahmens 44 sind so groß, daß eine Trägerplatte 36 nach oben und unten hindurchlaufen kann. Von den Längsträgern 48' des Rahmens 44 stehen - im Ausführungsbeispiel jeweils vier - im Querschnitt U-förmige Führungsschienen 50 nach oben ab, in denen in Figur 9 angedeutete Förderketten 52 laufen. Für den Antrieb der Förderketten 52 ist am oberen Ende des Hubwerks 20 eine Antriebseinheit 54 angebaut, die in Figur 13 dargestellt ist. Diese Antriebseinheit 54 ist mit Elektromotoren 56 und entsprechenden Kettenrädern 58 ausgerüstet, über welche die Förderketten 52 geführt sind. Die Förderketten 52 laufen innerhalb der Führungsschienen 50 nach unten zu einer in Figur 14 gezeigten Umlenkeinheit 60, die das Hubwerk 20 nach unten abschließt. Diese Umlenkeinheit 60 ist mit Umlenkrädern 74 für die Förderketten 52 und mit Spannelementen 72 ausgerüstet.

Zwischen dem nach unten vorletzten Schachtelement 42 und der Umlenkeinheit 60 befindet sich ein in Figur 12 gezeigtes unterstes Schachtelement 42', das in seinem grundsätzlichen Aufbau den Schachtelementen 42 entspricht. Der Unterschied besteht darin, daß ein freier Durchgang für die Trägerplatten 36 hier nicht mehr möglich ist; vielmehr werden diese bei der Aufzugsbewegung nach unten innerhalb des untersten Schachtelementes 42' auf Schienen 76 abgelegt, die sich vor den Längsträgern 48' befinden. Während der Aufwärtsbewegung innerhalb des Hubwerks 20 - bzw. während der Abwärtsbewegung im gegenüberliegenden Hubwerk 20' - liegen die Trägerplatten 36 und mit diesen gegebenenfalls die darauf liegenden Gegenstände 14 auf zwei einander gegenüberliegende Längsschienen 62 auf, die an den Ketten 52 in gleichmäßigen Abständen befestigt sind (Figur 9). Im untersten Schachtelement 42' laufen die Ketten 52 und die Längsschienen 62 durch Zwischenräume 78 hindurch, die zwischen den Längsträgern 48' und den Schienen 76 freigelassen sind.

Beim Ausführungsbeispiel der Figuren 3 und 6 ist jedem Hubwerk 20 bzw. 20' ein Bereitstellungsplatz 22 bzw. 22' vorgelagert, der eine Hubbühne 64 hat. Die Hubbühne 64 kann über Hubelemente 66, beispielsweise Hydraulikzylinder oder Spindeln, in vertikaler Richtung verstellt werden.

Bei dem in den Figuren 3 und 6 dargestellten Parkhaussystem dient ferner die unterste Ebene des Lagerblocks 10 für die Rückführung der Trägerplatten 36 bzw. als Pufferlager für leere Trägerplatten. Zu diesem Zweck besteht die unterste Ebene des Lagerblocks 10 aus Grundelementen 24", die gemäß Figur 7 niedriger als die Grundelemente 24 sind und in ihrer Höhe den Umlenkeinheiten 60 entsprechen. Jedes Grundelement 24'' nimmt ein Verschiebemodul 32'' auf, das nur mit Antriebseinheiten 34 für die Verschiebung in X-Richtung, nicht jedoch mit Antriebseinheiten 34' für die Verschiebung in Y-Richtung ausgerüstet sein muß. Entsprechendes gilt auch für die Umlenkeinheit 60, die in ihrem Bodenbereich ebenfalls einen solchen Verschiebemodul 32'' hat.

Im Ausführungsbeispiel der Figuren 3 und 6 für ein Parkhaus fährt ein abzustellendes Kraftfahrzeug in X-Richtung auf die Hubbühne 64 des Bereitstellungsplatzes 22, der im Einfahrtbereich E vor dem Hubwerk 20 liegt. Auf der Hubbühne 64 liegt eine leere Trägerplatte 36. Die Einfahrt ist in jeder beliebigen Zeile (in Y-Richtung) möglich. An der Hubbühne 64 ist eine Antriebseinheit 34 angebracht, die anschließend die Trägerplatte 36 mit dem darauf stehenden Fahrzeug in X-Richtung auf die Umlenkeinheit 60 schiebt, wo die Trägerplatte 36 von den Längsschienen 62 der Förderketten 52 erfaßt und in Z-Richtung nach oben gefördert wird. Das Hubwerk 20 hält in einer Ebene an, in der ein freier Stellplatz 12 zur Verfügung steht, so daß in dieser Ebene die Trägerplatte 36 durch nicht weiter dargestellte Greifer in den Grundelementen 24, die in X-Richtung auf das Hubwerk 20 folgen, und anschließend von den Antriebseinheiten 34 in Längsrichtung und gegebenenfalls von den Antriebseinheiten 34' in Querrichtung verschoben werden kann.

Die Entnahme des Fahrzeugs erfolgt dann in entsprechender Weise über das Hubwerk 20' und den Bereitstellungsplatz 22' auf der gegenüberliegenden Stirnseite des Lagerblocks 10. Auch dort sind in den letzten, vor dem Hubwerk 20' liegenden Grundelementen 24 entsprechende Greifer zur Übergabe in das Hubwerk 20' vorgesehen.

Sobald das Fahrzeug wieder ausgefahren ist, wird die leere Trägerplatte 36 innerhalb des Bereitstellungsplatzes 22' durch die Hubbühne 64 abgesenkt und mittels der Antriebseinheiten 34 innerhalb der Grundelemente 24'' der untersten Ebene in Längsrichtung wieder zu dem Einfahrbereich E zurückgeführt. Hier gelangt die leere Trägerplatte 36 in den Bereitstellungsplatz 22, dessen Hubbühne 64 abgesenkt ist. Sobald die Trägerplatte 36 auf der Hubbühne 64 liegt, wird diese auf Fahrbahnniveau angehoben, so daß ein weiteres Fahrzeug einfahren kann.

Die genannten Bewegungen werden durch einen Computer gesteuert, der die Trägerplatten 36 mit den darauf stehenden Fahrzeugen bzw. die leeren Trägerplatten 36 zu den jeweils am günstigsten gelegenen Stellplätzen 12 führt. Der Benutzer erhält nach der Einfahrt eine entsprechend codierte Karte, so daß er für die Ausfahrt sein Fahrzeug in kürzester Zeit wieder erhält. Für den Fall, daß der Benutzer die Berechtigungskarte verliert, ist im Eingangsbereich eine Videokamera vorgesehen, welche das polizeiliche Kennzeichen des Fahrzeugs erfaßt und an einen Rechner weitergibt. Der Benutzer kann somit im Notfall auch das polizeiliche Kennzeichen an einer Eingabeeinheit eingeben, damit über den Rechner das Fahrzeug wieder erkannt und zurückgeholt werden kann. Andere Identifizierungsmöglichkeiten nach dem Stand der Technik können alternativ eingesetzt werden.

Wie bereits erwähnt, kann die unterste Ebene des Lagerblocks 10 oder jede beliebige Zwischenebene auch als Magazin oder Puffer für leere Trägerplatten 36 ausgenutzt werden. In diesem Fall sind in jedem Grundelement 24'' mehrere, in Figur 7 dargestellte, flache Bodenrahmen 26' angebracht, die den Bodenrahmen 26 der Grundelemente 24 in ihren Abmessungen entsprechen. Innerhalb jedes Bodenrahmens 26' befindet sich ein Verschiebemodul 32'' mit zwei Antriebseinheiten 34 für die Verschiebung in X-Richtung. Da mehrere dieser flachen Bodenrahmen 26' innerhalb der Grundelemente 24'' übereinander angeordnet sind, können die leeren Trägerplatten 36 innerhalb der jeweiligen Ebene gestapelt und bei Bedarf abgerufen werden.

Es ist selbstverständlich auch möglich, innerhalb der Bodenrahmen 26' Verschiebemodule 32 anzubringen, die zusätzlich zu den Antriebseinheiten 34 für die X-Richtung auch Antriebseinheiten 34' für die Y-Richtung haben.

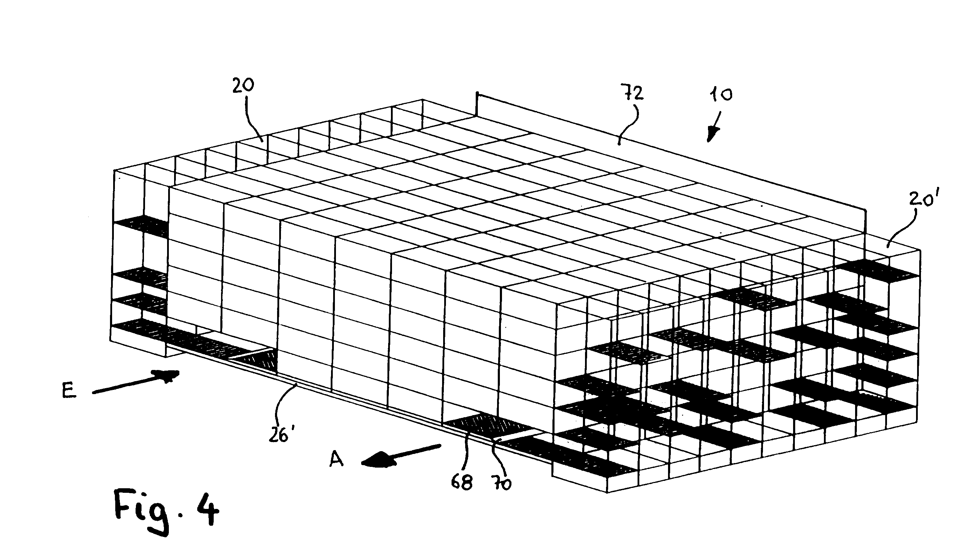

Figur 4 zeigt eine Variante eines erfindungsgemäß ausgebildeten Parkkhauses, bei der die Einfahrt E und die Ausfahrt A nicht an den Stirnseiten vor den dort angebrachten Hubwerken 20 bzw. 20' vorgesehen sind, sondern an einer Längsseite innerhalb des Lagerblocks 10 auf dessen unterer Ebene. In diesem Bereich sind keine Bereitstellungsplätze mit Hubbühne erforderlich, sondern es sind feste Bodenrahmen 26' (vgl. Figur 7) mit Verschiebemodulen 32 angebracht, welche die Fahrzeuge zu den Hubwerken 20 bringen bzw. von den Hubwerken 20' abholen. Der Ein- und Ausfahrbereich ist durch Fahrbahnplatten 68 abgedeckt, die mit geringem Abstand über den Bodenrahmen 26' hängen und zum Übergang auf die Trägerplatten 36 teilweise schräge Rampen 70 haben. Der Raum zwischen der Einfahrt E und der Ausfahrt A kann für die unterschiedlichsten Zwecke genutzt werden, beispielsweise für einen Kassenbereich, die Steuerung, eine Palettenstapelung oder Verkaufsläden. Da dieser Bereich unten nicht abgestützt ist, sind am oberen Ende des Lagerblocks 10 Längsgurte 72 angebracht, die in Figur 4 und 7 angedeutet sind und die Vertikalkräfte aufnehmen.

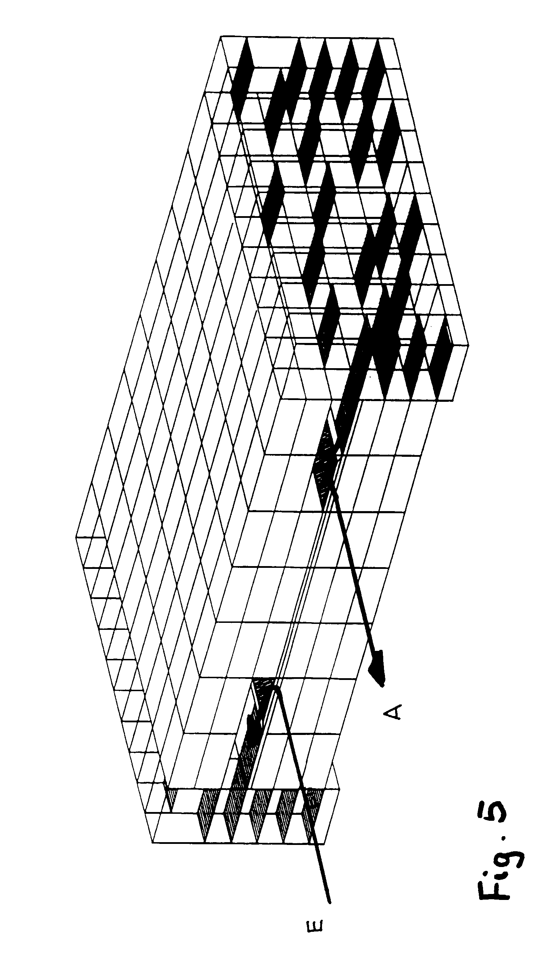

Die Variante der Figur 5 unterscheidet sich vom Ausführungsbeispiel der Figur 4 dadurch, daß der Ein- und Ausfahrbereich nicht auf der unteren Ebene liegt, sondern in einer Zwischenebene, während die darunterliegenden Ebenen unterirdisch sind.

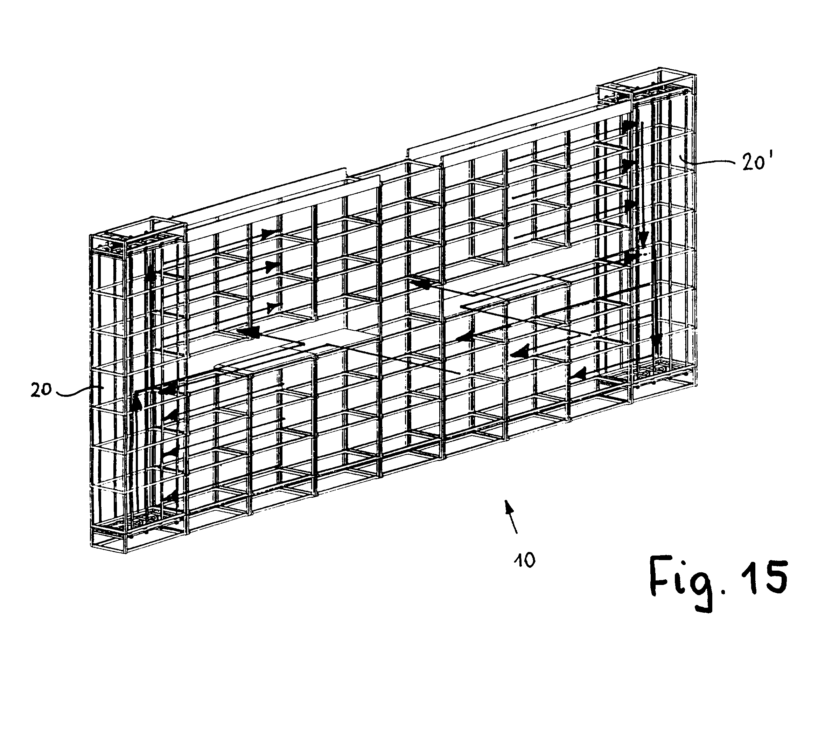

Figur 15 zeigt die Hauptbewegungsrichtungen der Fahrzeuge im Fall eines Parkhauses, bei dem gemäß Figur 5 der Ein- und Ausfahrbereich in einer Zwischenebene vorgesehen ist.

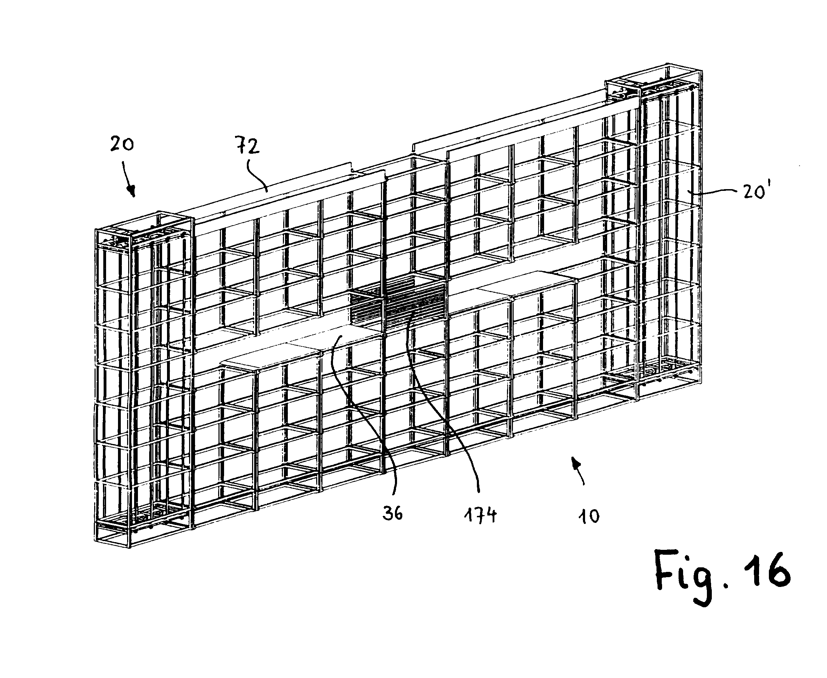

Figur 16 zeigt die Möglichkeit, in einer beliebigen Zwischenebene des Lagerblocks 10 einen Pufferplatz 174 für Trägerplatten 36 vorzusehen.

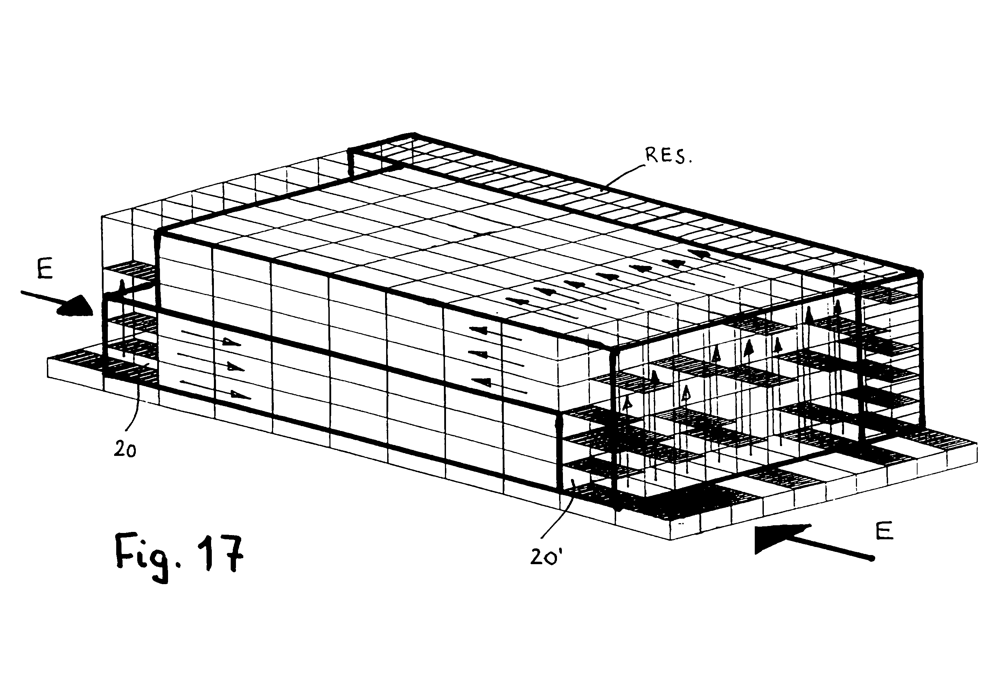

Eine Variante des Parkhauses der Figur 3 ist in Figur 17 angedeutet. Diese Variante dient zur bedarfsgerechten Steuerung der Hubwerke 20, 20', um einem Stoßbetrieb gerecht zu werden. Am Beispiel der Figur 3 wurde erläutert, daß die Hubwerke 20 nur nach oben (Einfahrbetrieb) und die 20' nur nach unten (Ausfahrbetrieb) arbeiten. Beim Beispiel der Figur 17 können bei Bedarf die Bewegungsrichtungen umgekehrt werden, so daß auch zumindest ein Teil der Hubwerke 20' im Ausfahrbereich wenigstens zeitweise nach oben gesteuert wird, um eine erhöhte Einparkfrequenz bei Stoßbetrieb zu erreichen. Ein Teilbereich des Parkhauses - hier die hintersten, mit RES bezeichneten Zeilen - kann in der Standardweise betrieben werden, wie sie bei Figur 3 erläutert wurde, um diesen Bereich für Dauerparker zu reservieren.

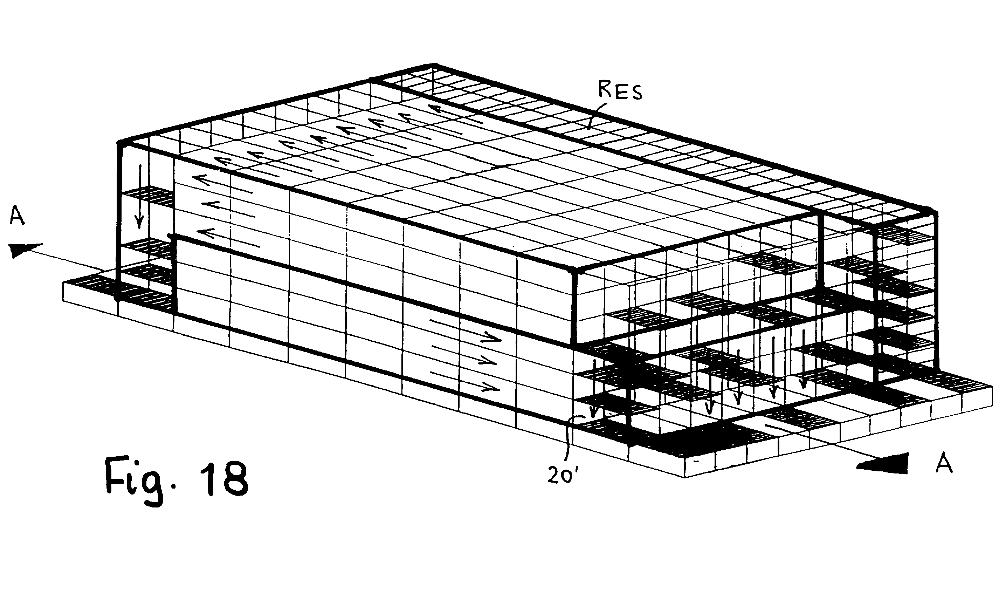

Figur 18 zeigt eine weitere Variationsmöglichkeit, bei der die Ausfahrfrequenz zu Stoßzeiten erhöht wird.

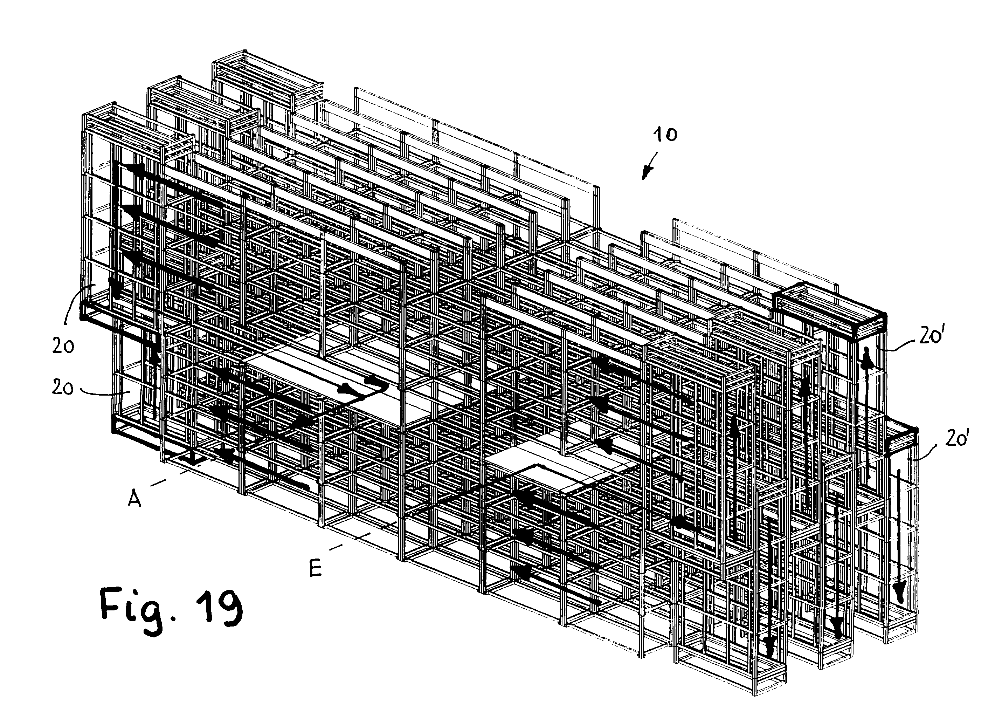

In Figur 19 ist eine Variante der Figur 5 angedeutet, bei der die Hubwerke 20, 20' an beiden Stirnseiten des Lagerblocks 10 versetzt zueinander angeordnet sind und abwechselnd nach oben bzw. unten fördern. Damit wird eine strikte Trennung des Einfahrbereiches vom Ausfahrbereich hergestellt. Der freie Raum zwischen den Hubwerken 20, 20' kann für weitere Stellplätze 12 oder Magazinplätze verwendet werden.

Neben der quaderförmigen Bauweise ist in Abhängigkeit von den Grundstücksgegebenheiten und den Einsatzerfordernissen jede andere Geometrie realisierbar.

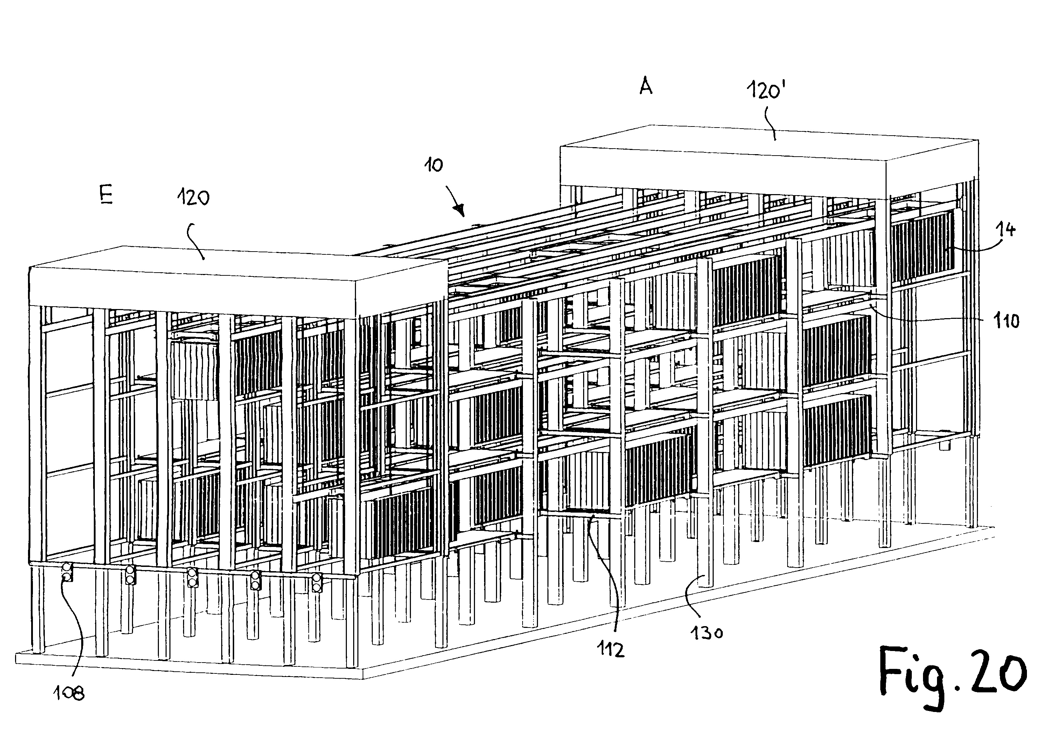

Die Figuren 20 bis 30 zeigen eine Variante der Erfindung in Form eines Containerlagers. Auch hier ist der Lagerblock 10 an seinen beiden Stirnseiten (Eingangsbereich E und Auslagerseite A) durch Hubwerke 120 bzw. 120' abgeschlossen. Die unterste Ebene des Lagerblocks 10 dient als Durchfahrt für Lastkraftwagen, welche die Container 14 anliefern bzw. diese abholen. Die Durchfahrt der Lastkraftwagen wird durch eine mit Ampeln 108 bestückte Anlage gesteuert. Sollte das Containerlager ohne Umlaufbahnen nur mit Chassis oder AGV (automatic guided vehicle = fahrerloses Transportsystem) betrieben werden, so fährt beispielsweise ein Chassis in einen beliebigen Schacht mit grüner Ampelschaltung ein und nimmt einen Container 14 auf, worauf dem Fahrer bzw. der Steuerung über Datenfunk das Ziel mitgeteilt wird. Bei Erreichen des Zieles wird die Zielangabe quittiert, und der Fahrer bzw. das AGV holt in gleicher Weise den nächsten Container ab.

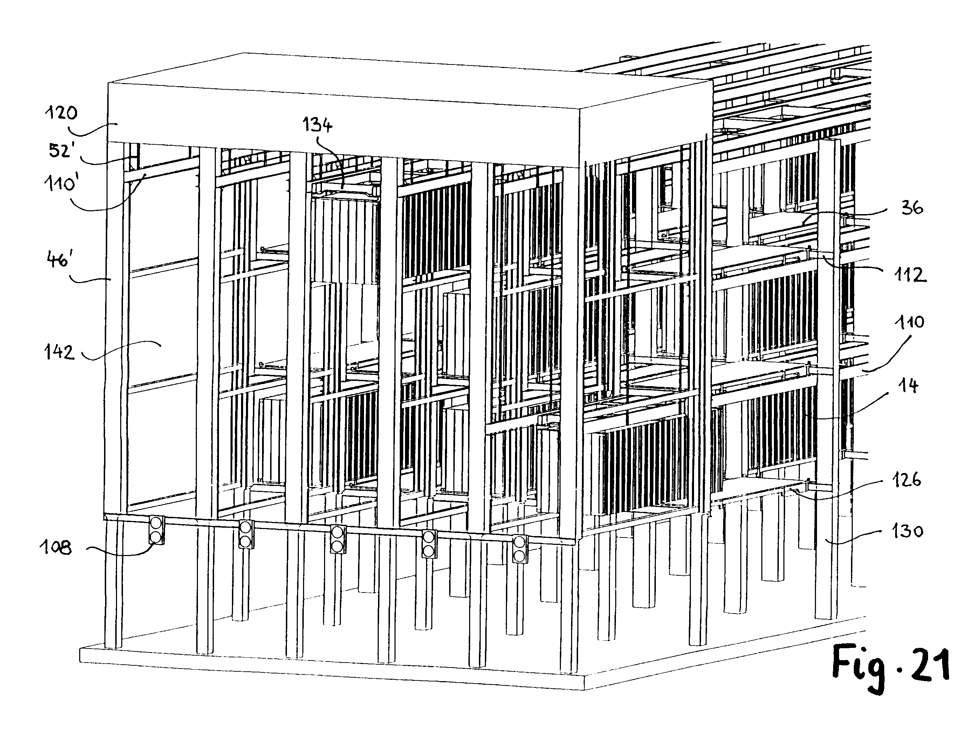

Das Containerlager ist, wie insbesondere die Figuren 20 und 21 zeigen, als Stahlkonstruktion mit vertikalen Stützen 130 ausgeführt, die durch in X-Richtung verlaufende Laufschienen 110 und durch in Y-Richtung verlaufende Führungsschienen 112 miteinander verbunden sind.

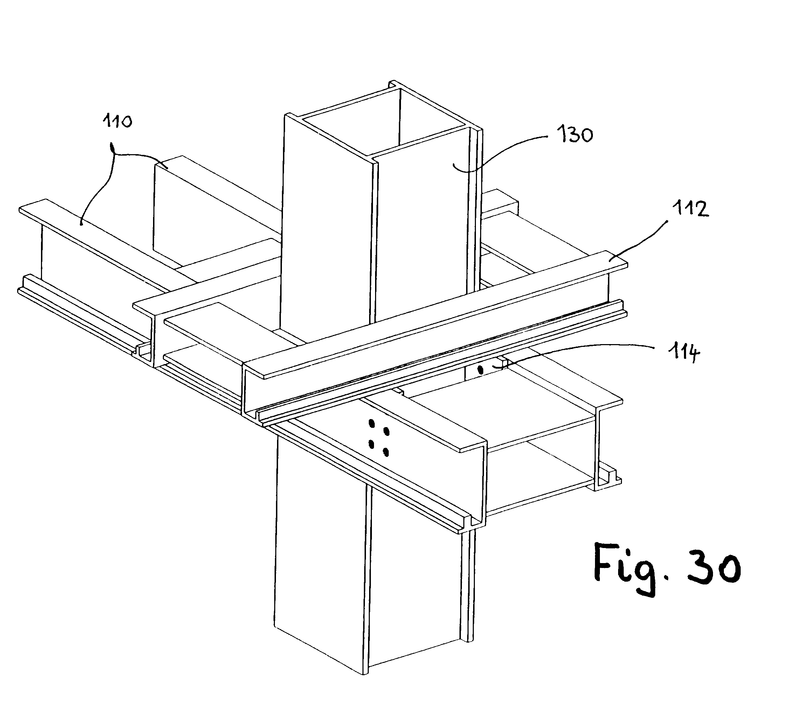

Figur 30 zeigt die Befestigung der im Querschnitt C-förmigen Laufschienen 110 über Knotenbleche 114 an einer Stütze 130; die quer dazu verlaufenden Führungsschienen 112 haben ebenfalls einen C-förmigen Querschnitt und sind auf den Laufschienen 110 abgestützt. Zur weiteren Versteifung des Systems können Diagonalverbände und Fachwerkrahmen vorgesehen sein, die aus Gründen der Vereinfachung nicht weiter dargestellt sind.

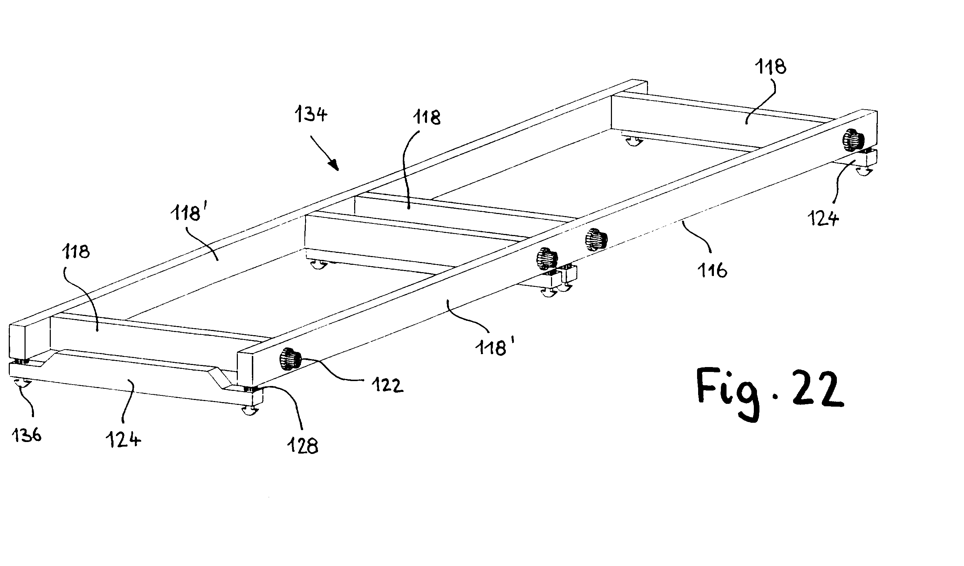

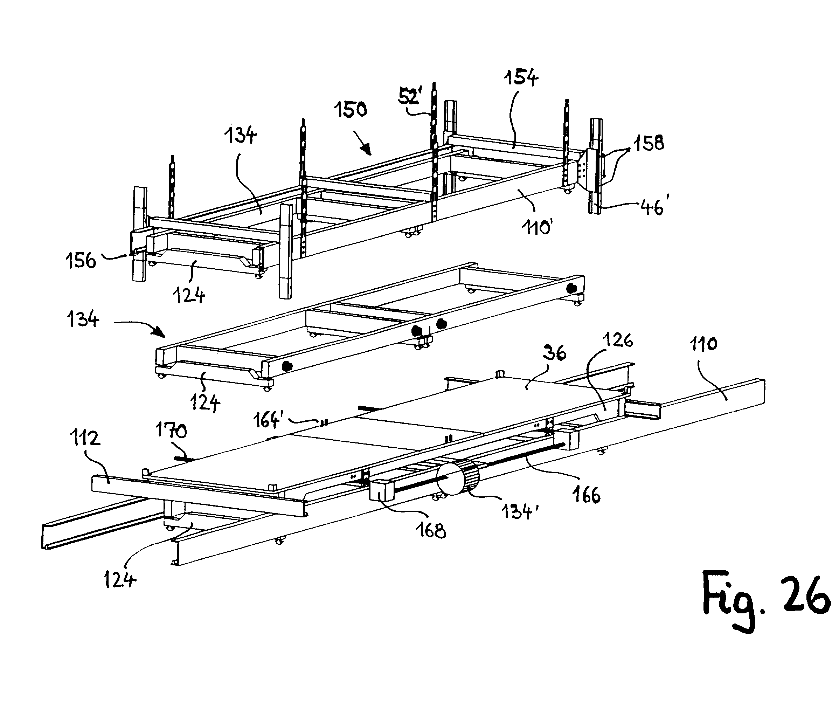

Zum Verschieben der Container 14 in X-Richtung sind die Antriebseinheiten 134 als sogenannte Spreader ausgebildet, die in den Figuren 22 und 26 dargestellt sind. Jeder Spreader 134 hat einen Tragrahmen 116 mit zwei zueinander parallelen Längsholmen 118' und vier diese verbindenden Querholmen 118. Die beiden äußeren Querholme 118 liegen im Bereich der kurzen Außenseiten des rechteckigen Tragrahmens 116, während die beiden mittleren Querholme 118 mit geringen Abstand im mittleren Bereich des Tragrahmens 116 befestigt sind.

Zum Verfahren des Tragrahmens 116 in X-Richtung sind an der Außenseite der Längsholme 118' Laufrollen 122 gelagert, die wenigstens zum Teil von nicht weiter dargestellten, hydraulisch oder elektrisch wirkenden Motoren angetrieben werden können. Die Laufrollen 122 greifen in die C-förmigen Laufschienen 110 ein.

Jeder Querholm 118 trägt eine Traverse 124, die über doppeltwirkende Hydraulikzylinder 128 abgesenkt und angehoben werden kann.

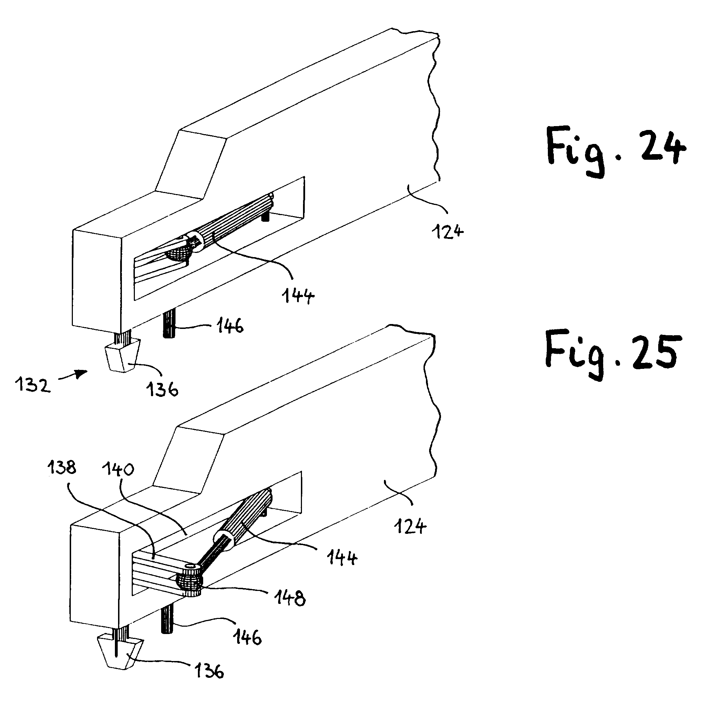

In den Figuren 24 und 25 ist deutlich zu erkennen, daß jede Traverse 124 an ihren beiden Enden je ein Greifelement 132 (Twistlock) hat, das als Verriegelungsbolzen 136 ausgebildet ist, der um 90° verdreht werden kann. Hierzu ist der Verriegelungsbolzen mit einem Schwenkarm 138 fest verbunden, der in einer Aussparung 140 am Ende der Traverse 124 gelagert und dort über ein Kugelgelenk 148 mit einem Betätigungszylinder 144 verbunden ist. Von der Unterseite der Traverse 124 steht neben dem jeweiligen Verriegelungsbolzen 136 ein höhenbeweglicher Sicherungstift 146 nach unten vor, der beim Aufsitzen auf der Oberseite des Containers 14 bzw. dessen Eckbereich (corner casting) die Drehbewegung des Verriegelungsbolzens 136 in seine Riegelstellung freigibt.

Zum Ergreifen eines Containers 14 werden die beiden hierfür benötigten Traversen 124 über die Hydraulikzylinder 128 abgesenkt, so daß die Verriegelungsbolzen 136 in der in Figur 24 gezeigten Stellung in entsprechende Aufnahmeöffnungen auf der Oberseite des anzuhebenden Containers 14 eingreifen können. Wenn die Verriegelungsbolzen 136 fehlerfrei in die Aufnahmeöffnungen abgesenkt sind, befindet sich der zugeordnete Sicherungsstift 146 in seiner eingedrückten Stellung, in der er die Drehbewegung des Verriegelungsbolzens 136 aus der Stellung der Figur 24 in die Eingriffsstellung der Figur 25 freigibt. Nun ist eine bajonettartige Verbindung zwischen den Verriegelungsbolzen 136 und dem anzuhebenden Container 14 hergestellt, so daß anschließend die beiden Traversen 124 wieder angehoben werden können. Danach kann die Antriebseinheit 134 (Spreader) über die Laufrollen 122 in den Laufschienen 110 an den gewünschten Stellplatz 12 verfahren werden.

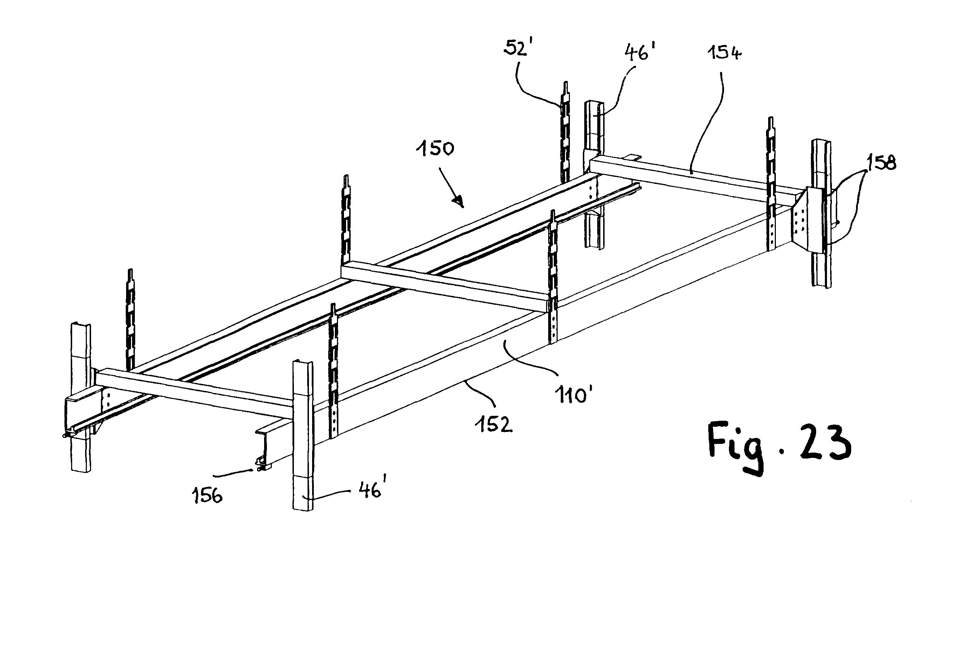

Innerhalb des Lagerblocks 10 ist in jeder Ebene jeweils eine Antriebseinheit 134 je Zeile (X-Richtung) vorgesehen, die zum Transport der Container 14 innerhalb der Zeile bis vor die Hubwerke 120, 120' dient. Auch die Hubwerke 120 bzw. 120' haben jeweils eine in der gleichen Weise ausgebildete Antriebseinheit 134. Dabei hat jedes Hubwerk 120 eine vertikal verfahrbere Hubeinheit 150, die in Figur 23 dargestellt ist. Die Hubeinheit 150 besteht aus einem rechteckigen Rahmen 152, der aus zwei zueinander parallelen Laufschienen 110' besteht, die durch Querträger 154 miteinander verbunden sind. Der Rahmen 152 hängt an Ketten 52', die über eine Antriebseinheit 54 vertikal bewegt werden können; die Antriebseinheit 54 ist am Beispiel der Figuren 6 und 7 erläutert.

Zur Höhenverstellung der Hubeinheit 150 können auch andere Einrichtungen vorgesehen sein, beispielsweise Spindeln oder hydraulische Vorrichtungen.

Figur 26 zeigt im oberen Teil eine Antriebseinheit 134 (Spreader) innerhalb einer Hubeinheit 150. Um beim Ein- und Ausfahren des jeweiligen "Aufzugsspreaders" für die Übernahme bzw. Übergabe eines Containers 14 einen höhengleichen Übergang von den Laufschienen 110 innerhalb des Lagerblocks 10 zu den Laufschienen 110' der Hubeinheit 150 zu gewährleisten, hat diese am Ende der Laufschienen 110' Verriegelungsstifte 156; diese sichern einen stoßfreien Übergang des Aufzugsspreaders zwischen dem Hubwerk 120 und dem ersten bzw. letzten Stellplatz im Lagerblock 10.

Wie bei den zuvor erläuterten Ausführungsbeispielen hat auch jeder Aufzugsschacht 142 an den Ecken vier Führungssäulen 46', in die Führungsrollen 158 eingreifen, die an den vier Ecken der Hubeinheit 150 vorgesehen sind.

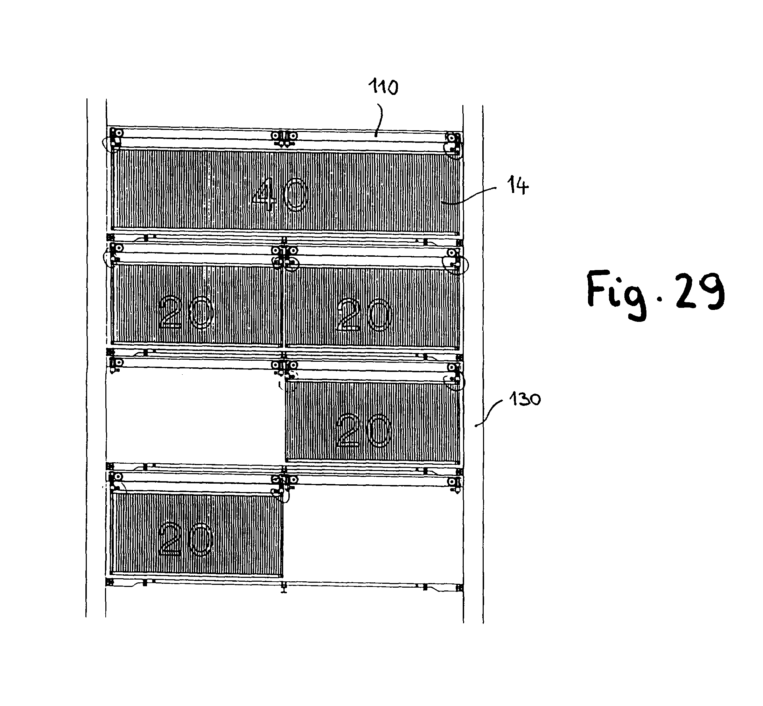

Figur 29 zeigt, daß aufgrund der erläuterten Verteilung der Traversen 124 jeder Spreader in der Lage ist, entweder mit seinen beiden äußeren Traversen 124 einen langen Container 14 oder mit allen vier Traversen 124 zwei kurze Container 14 aufzunehmen. Selbstverständlich ist es auch möglich, nur einen kurzen Container 14 zu erfassen oder durch andere Traversenanordnungen Container mit Zwischen- oder Übergrößen aufzunehmen.

Zum Verschieben der Container 14 in Y-Richtung um jeweils einen Stellplatz 12 innerhalb jeder Reihe sind rechteckige Bodenrahmen 126 vorgesehen, die an ihren Schmalseiten nicht weiter dargestellte Laufrollen haben, die in den Führungsschienen 112 in Y-Richtung abrollen. Im mittleren Bereich hat jeder Bodenrahmen 126 zusätzliche Auflagerrollen 160, die auf Stützschienen 162 laufen. Auf jedem Bodenrahmen 126 liegen Trägerplatten 36 mit Führungsecken 164 und im mittleren Bereich befestigten, gefederten Führungsbolzen 164'. Der Abstand zwischen den Führungsecken 164 und den Führungsbolzen 164' ist so bemessen, daß kleine und große Container 14 sicher auf dem Bodenrahmen 126 gehalten werden.

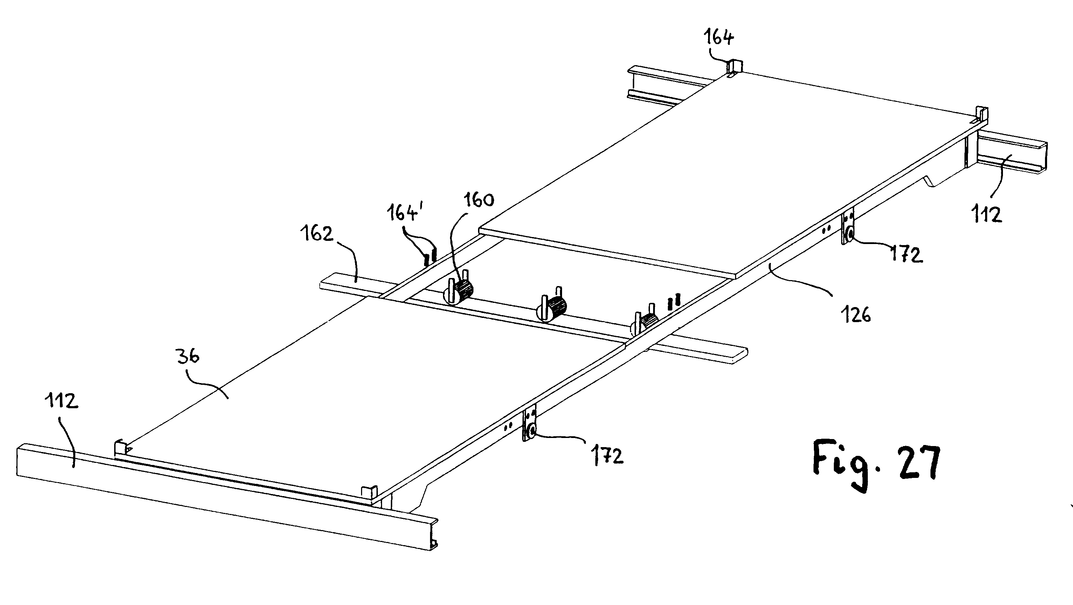

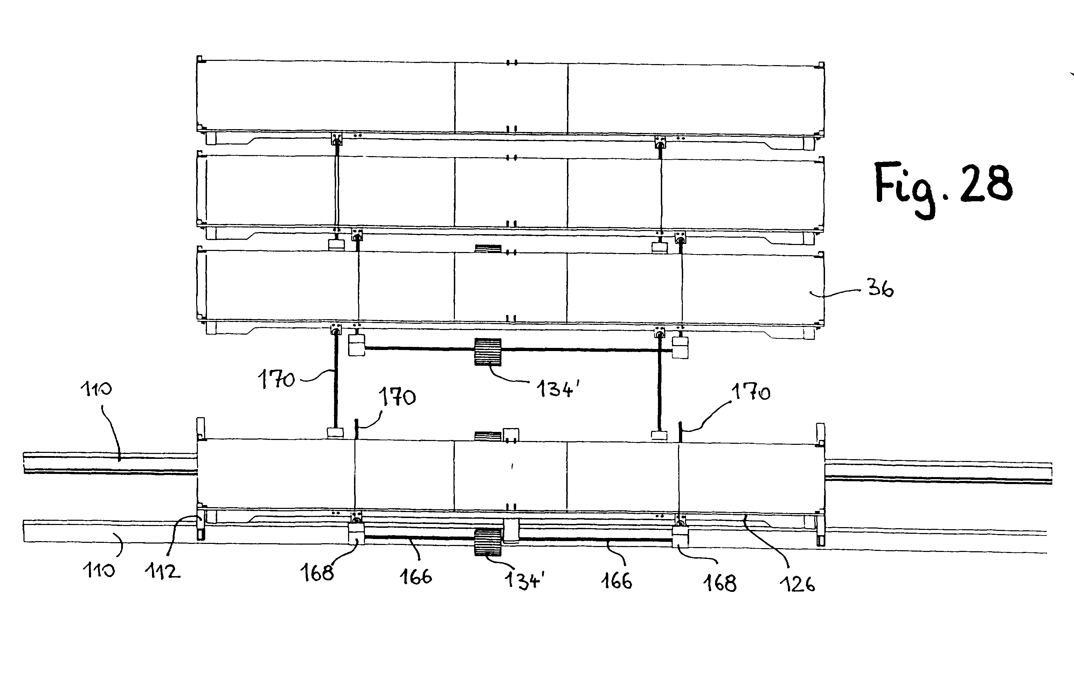

Figur 28 zeigt, daß jedem Bodenrahmen 126 eine Antriebseinheit 134' zugeordnet ist, die beispielsweise ein Elektromotor sein kann. Die Antriebseinheit 134' ist an der Außenseite einer der beiden Laufschienen 110 für den Bodenrahmen 126 befestigt und hat eine durchgehende Antriebswelle 166, deren beide Enden über je ein Winkelgetriebe 168 mit einer Antriebsspindel 170 verbunden sind. Die beiden Antriebsspindeln 170 jedes Bodenrahmens 126 sind in Eingriff mit einer Spindelmutter 172, die gemäß Figur 27 an einer Längsseite des Bodenrahmens 126 angebracht sind.

Wie Figur 28 zeigt, sind die beiden Antriebsspindeln 170 eines Bodenrahmens 126 zu den Antriebsspindeln 170 des benachbarten Bodenrahmens 126 versetzt angeordnet, um eine gegenseitige Behinderung zu vermeiden.

Die Zahl der Bodenrahmen 126 in jeder Reihe jeder Ebene des Lagerblocks 10 entspricht der um 1 verringerten Zahl der dort vorhandenen Stellplätze. So ist es möglich, die jeweils gewünschte Zahl der Bodenrahmen 126 gemeinsam um einen Stellplatz zu verschieben, wie das beispielsweise am Beispiel der Figur 2 erläutert ist.

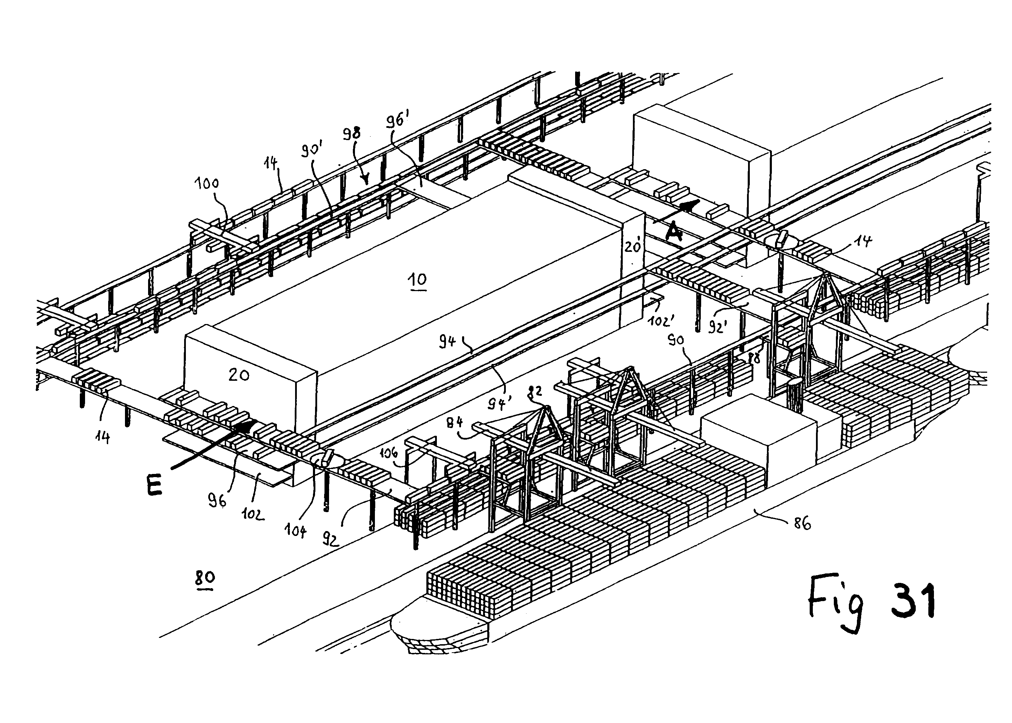

Figur 31 zeigt eine Anwendungsmöglichkeit des Lagerblocks 10 für die Aufnahme von Containern in einer Hafenanlage. Der Aufbau des Lagerblocks 10 ist analog zu den bereits beschriebenen Beispielen, insbesondere der Figuren 1, 2 und 20 bis 30.

Die Hubwerke 20 zum Einlagern (E) der Container 14 sind an einer Stirnseite des Lagerblocks 10 vereinigt, während an der gegenüberliegenden Stirnseite (A) die Hubwerke 20' zum Auslagern zusammengefaßt sind.

Der Lagerblock 10 ist am Kai 80 eines Hafens aufgebaut, an welchem Portalkrane 82 verfahrbar sind. Jeder Portalkran 82 hat eine Containerbrücke 84 zum Löschen bzw. Beladen eines Schiffes 86 mit Containern 14. Unterhalb der Containerbrücke 84 jedes Portalkrans 82 ist an diesem eine Pufferebene 88 vorgesehen, auf der eine bestimmte Anzahl von Containern 14 Platz hat. Die Pufferebenen 88 aller Portalkrane 82 sind über eine Förderbahn 90 miteinander verbunden, die beispielsweise als Bandförderer oder Kettenförderer ausgebildet sein kann. An der vom Schiff 86 abgewandten Längsseite der Förderbahn 90 schließen sich zwei rechtwinklig zu dieser fördernde Umlaufbahnen 92 bzw. 92' an, die die Container 14 unmittelbar vor die Einlagerungsebene E der Aufzugsorgane 20 führen bzw. die aus dem Lagerblock 10 abgegebenen Container 14 hinter den Hubwerken 20' aufnehmen und zu der Förderbahn 90 bringen.

Die beiden Umlaufbahnen 92 und 92' können durch längsseitig am Lagerblock 10 verlaufende Pufferbahnen 94 miteinander verbunden sein.

Unter den beiden Umlaufbahnen 92 und 92' sind vor den Hubwerken 20 bzw. hinter den Hubwerken 20' zwei weitere Umlaufbahnen 96, 96' vorgesehen, die für die Bahnverladung der Container 14 dienen. Die entsprechenden Gleisanlagen 98 sind auf der vom Kai 80 abgewandten Längsseite des Lagerblocks 10 verlegt. Dort sind die beiden Umlaufbahnen 96 und 96' durch eine der Förderbahn 90 auf der Kaiseite entsprechende Förderbahn 90' miteinander verbunden, wobei für die Bahnverladung entsprechende Kranbrücken 100 vorgesehen sind.

Unter den beiden stirnseitig vorgesehenen Umlaufbahnen 96 und 96', die ebenfalls über längsseitig verlaufende Pufferbahnen 94' miteinander verbunden sein können, sind an den beiden Stirnseiten des Lagerblocks 10 zwei Verschiebebahnen 102, 102' vorgesehen, die dazu dienen, die Container 14 in Y-Richtung zu verschieben.

In Figur 20 ist ferner zu erkennen, daß in die Umlaufbahn 92 eine Drehbühne 104 zum Drehen der einzelnen Container 14 um 180° integriert ist.

Die Entnahme der einzelnen Container 14 aus dem Lagerblock 10 erfolgt in der bereits erläuterten Weise, wobei der jeweils aufgenommene Container innerhalb des Lagerblocks 10 am letzten Platz vor dem Hubwerk 20' abgestellt wird. Die Antriebseinheit des Hubwerks 20' nimmt den Container 14 ab und setzt ihn auf die Umlaufbahn 92' für den Weitertransport auf das Schiff 86, auf die Umlaufbahn 96' für den Weitertransport zur Bahnverladung bzw. auf die Verschiebebahn 102', von der die Container 14 auf Lastkraftfahrzeuge umgeladen werden.

Die Einlagerung der Container auf der E-Seite erfolgt in umgekehrter Weise. Hier fahren die Lastkraftwagen mit den angelieferten Containern unter die Hubwerke 20, wo die Container abgenommen werden. Nach dem Entladen fährt der Lastkraftwagen in der untersten Ebene des Lagerblocks 10, die als Durchfahrt dient, bis unter die Hubwerke 20' auf der A-Seite, wo ein abgegebener Container aufgenommen werden kann, der vorher, falls erforderlich, auf der Verschiebebahn 102' in Y-Richtung über die benötigte Durchfahrt positioniert worden ist.

Die Umlaufbahnen 92, 92' und 96, 96' für die Bahn- und Schiffsverladung dienen gleichzeitig als Puffer im Falle eines möglichen Vorstaus sowie als Ausweichmöglichkeiten im Fall von technischen Störungen. Es ist auch möglich, die Schiffs- und Bahnverladung ab Lagerblocksystem nicht über Umlaufbahnen durchzuführen, sondern wie bisher über AGV oder Chassis.

Die Pufferebenen 88 der Portalkrane 82 dienen als Stauraum für die Container 14 beim Löschen des Schiffes 86 bzw. beim Beladen. Da sie mit den Portalkranen 82 verfahren werden und in der Höhe der Förderbahn 90 liegen, ist ein Weitertransport ohne Höhenverschiebung auf die Umlaufbahn 92 bzw. von den Umlaufbahnen 92' möglich.

Container 14 mit Übermaß, Gefahrgut oder Kühlgut, die nicht in den Lagerblock 10 aufgenommen werden sollen, können über Förderbrücken 106 (Transtrainer) von der Förderbahn 90 abgenommen bzw. auf diese aufgesetzt und so in den Gesamtablauf integriert werden.

Die Erfindung vereinigt die folgenden Vorteile bekannte Regallagersysteme:
- Direkter Zugriff auf jeden einzelnen Stellplatz entsprechend einem Hochregallager
- Schneller Durchsatz wie beim Durchlaufregal
- Geringer Platzbedarf wie beim Schieberegal.

## Patentansprüche

1. Vorrichtung mit einem Lagerblock (10) zum Speichern von Gegenständen und mit untereinander gleich ausgebildeten Stellplätzen (12), die in X-Richtung zwischen einem Eingangsbereich (E) und einer Auslagerseite (A) hintereinander, in der dazu rechtwinkligen Y-Richtung nebeneinander und in Z-Richtung übereinander angeordnet sind, wobei jeder Stellplatz (12) mit einer Antriebseinheit (34') zum Verschieben der Gegenstände in Y-Richtung ausgerüstet ist und Antriebseinheiten (34) zum Verschieben in X-Richtung vorgesehen sind und wobei eine Ebene des Lagerblocks (10) als Speicher- und Rückführebene für leere Paletten ausgebildet und wenigstens ein Hubwerk (20) vorgesehen ist, **dadurch gekennzeichnet**, daß jede der in X-Richtung der Zeilen aufeinander folgenden Reihen einen freien Stellplatz (12) hat und in jeder zweiten Zeile ein Hubwerk (20) an wenigstens einer Seite des Lagerblocks (10) vorgesehen ist, wobei jeder Stellplatz (12) ein Verschiebemodul (32) mit wenigstens einer Antriebseinheit (34; 134) zum Verschieben einer auf dem Verschiebemodul (32) aufliegenden Trägerplatte (36) oder eines als Container ausgebildeten Gegenstandes (14) in X- bzw. Y-Richtung aufweist.

2. Vorrichtung nach Anspruch 1, dadurch gekennzeichnet, daß die Stellplätze (12) zur Aufnahme einer Trägerplatte (36) oder eines als Container ausgebildeten Gegenstandes (14) einen Bodenrahmen (26; 126) haben, der über Laufrollen in Führungsschienen (112) in Y-Richtung verschiebbar ist, wobei die Antriebseinheiten (134) zum Verschieben der Gegenstände (14) in X-Richtung einen Tragrahmen (116) aufweisen, der über Laufrollen (112) in X-Richtung in Laufschienen (110) verfahrbar ist und an seiner Unterseite wenigstens zwei vertikal verstellbare Traversen (124) mit Greifelementen (132) zum Erfassen der Gegenstände (14) von oben trägt.

3. Vorrichtung nach Anspruch 2, dadurch gekennzeichnet, daß der Tragrahmen (116) im Bereich seiner kurzen Außenseiten zwei Traversen (124) und im mittleren Bereich wenigstens zwei weitere Traversen (124) trägt.

4. Vorrichtung nach Anspruch 2 oder 3, dadurch gekennzeichnet, daß der Tragrahmen (116) mit einer Wiegeeinrichtung ausgerüstet ist, die an eine zentrale Steuerung anschließbar ist.

5. Vorrichtung nach einem der vorhergehenden Ansprüche, dadurch gekennzeichnet, daß das Hubwerk (120) einen in einem Schacht (142) vertikal verfahrbaren, zwei zueinander parallele Laufschienen (110') aufweisenden Rahmen (152) zur Aufnahme eines Tragrahmens (116) hat.

6. Vorrichtung nach einem der vorhergehenden Ansprüche, dadurch gekennzeichnet, daß außerhalb des Lagerblocks (10) wenigstens eine mit dem Lagerblock (10) verbundene Umlaufbahn (92, 96) für den Transport der Gegenstände (14) vorgesehen ist.

7. Vorrichtung nach Anspruch 6, dadurch gekennzeichnet, daß in wenigstens einer Umlaufbahn (92) eine Drehbühne (104) für die Gegenstände (14) eingebaut ist.

8. Vorrichtung nach Anspruch 6 oder 7, dadurch gekennzeichnet, daß wenigstens eine Umlaufbahn (92, 96) mit einer Pufferebene (88) und/oder einer Pufferbahn (94) für die Gegenstände (14) verbunden ist.

9. Vorrichtung nach einem der vorhergehenden Ansprüche, dadurch gekennzeichnet, daß den an wenigstens einer Außenseite (18) des Lagerblocks (10) zusammengefaßten Hubwerken (20) eine Verschiebebahn (102) für die Gegenstände (14) zugeordnet ist.

10. Vorrichtung nach einem der vorhergehenden Ansprüche, dadurch gekennzeichnet, daß die unterste Ebene des Lagerblocks (10) als Durchfahrt für Lastkraftfahrzeuge dient.

11. Vorrichtung nach einem der vorhergehenden Ansprüche, dadurch gekennzeichnet, daß im Eingangsbereich (E) eine Registriervorrichtung zum Erkennen der Daten der eingelieferten Gegenstände (14) angeordnet ist, wobei die erfaßten Daten in einem Rechner gespeichert und zur Wiederauffindung und Ausgabe des Gegenstandes (14) verarbeitet werden.

12. Verfahren zur Verwendung der Vorrichtung nach einem der vorhergehenden Ansprüche, **dadurch gekennzeichnet**, daß zumindest bei vollbesetztem Beschickungszustand des Lagerblocks (10) in jeder der in X-Richtung aufeinander folgenden Reihen ein Stellplatz (12) freigelassen wird, so daß für die Entnahme eines Gegenstandes (14) in X-Richtung die in X-Richtung davor stehenden Gegenstände ausschließlich in Y-Richtung auf die dort jeweils vorhandenen, freien Stellplätze verschoben werden, wodurch in Richtung der Zeilen (X-Richtung) eine freie Gasse (16) gebildet wird, wobei in jeder zweiten Zeile ein Hubwerk (20) vorgesehen ist, das den Vertikaltransport der Gegenstände (14) übernimmt.

## Claims

1. Device comprising a storage block (10) for storing objects and comprising identical storage places (12) arranged behind one another in the X direction between an entry area (E) and an exit side (A), next to one another in the Y direction, which is orthogonal to the X direction, and in the Z direction above one another, each storage place (12) being equipped with a driving unit (34') for displacing the objects in the Y direction and driving units (34) being provided for displacing the objects in the X direction, wherein one level of the storage block (10) is designed as a storage and return level for empty pallets and wherein at least one elevating member (20) is provided, characterized in that each of the rows following one another in the X direction of the lines has at least one free storage place (12) and that in every second line an elevating member (20) is provided on at least one side of the storing block (10), wherein each storage place (12) has a displacing module (32) with at least one driving unit (34; 134) for displacing a bearer plate (36) resting on the displacing module (32) or an object (14) designed as a container in the X or in the Y direction.

2. Device according to claim 1, wherein the storage places (12) for receiving a bearer plate (36) or an object (14) designed as a container have a bottom frame (26; 126) which can be displaced in giude rails (112) in the Y direction by means of running rollers, wherein the driving units (134) for displacing the objects (14) in the X direction have a bearing frame (116) which can be moved in the X direction by means of running rollers (122) in running rails (110) and which bears on its underside at least two vertically adjustable cross members (124) with gripping elements (132) for seizing the objects (14) from above.

3. Device according to claim 2, wherein the bearing frame (116) bears in the region of its short outer sides two cross members (124) and in the central region at least two further cross members (124) .

4. Device according to claim 2 or 3, wherein the bearing frame (116) is equipped with a weighing device, which can be connected to a central control.

5. Device according to any of the preceding claims, wherein the elevating member (120) has a frame (152) which can be moved vertically in a shaft (142), has two mutually parallel running rails (110') and is intended for receiving a bearing frame (116).

6. Device according to any of the preceding claims, wherein at least one running-around track (92, 96), connected to the storage block (10), is provided outside the storage block (10) for the transport of the objects (14).

7. Device according to claim 6, wherein a turning platform (104) for the objects (14) is integrated in at least one running-around track (92).

8. Device according to claim 6 or 7, wherein at least one running-around track (92, 96) is connected to a buffer level (88) and/or a buffer track (94) for the objects (14).

9. Device according to any of the preceding claims, wherein to the elevating members (20) combined on at least one outer side (18) of the storage block (10) a displacing track (102) for the objects (14) is assigned.

10. Device according to any of the preceding claims, wherein the lowermost level of the storage block (10) serves as a passage for trucks.

11. Device according to any of the preceding claims, wherein a registering device for detecting the data of the delivered objects (14) is arranged in the entry area (E), the acquired data being stored in a computer and processed for relocating and surrendering the object (14).

12. Process for using the device according to any of the preceding claims, characterized by the fact that at least in the fully charged condition of the storage block (10) in each of the rows following one another in the X direction one storage place (12) remains free such that in order to withdraw one object (14) in the X direction, the objects standing in front of it are shifted exclusively in the Y direction onto the free storage places existing there, in such a way that a free aisle (16) is formed in the direction of the lines (X direction), wherein in every second line an elevating member (20) is provided for the vertical transport of the objects (14).

## Revendications

1. Dispositif avec un bloc d'entreposage (10) pour le stockage d'objets et avec des places de stationnement (12) conçues identiques entre elles, qui sont disposées l'une derrière l'autre dans la direction X entre une zone d'entrée (E) et un côté de sortie du stock (A), l'une à côté de l'autre dans la direction Y perpendiculaire à la direction X et l'une au-dessus de l'autre dans la direction Z, chaque place de stationnement (12) étant équipée d'une unité d'entraînement (34') pour déplacer les objets dans la direction Y et d'unités d'entraînement (34) pour déplacer les objets dans la direction X, un niveau du bloc d'entreposage (10) étant conçu comme niveau de stockage et de remise en circulation pour les palettes vides et au moins un dispositif de levage (20) étant prévu, **caractérisé en ce** que chacune des rangées qui se suivent en direction X des files présente une place de stationnement libre (12) et que toutes les deux files est prévu un dispositif de levage (20) sur au moins un côté du bloc d'entreposage (10), chaque place de stationnement (12) présentant un module de déplacement (32) avec au moins une unité d'entraînement (34 ; 134) pour déplacer dans la direction X ou Y une plaque support (36) reposant sur le module de déplacement (32) ou un objet (14) conçu comme conteneur.

2. Dispositif selon la revendication 1, caractérisé en ce que les places de stationnement (12) ont un cadre de plancher (26 ; 126) destiné à recevoir une plaque support (36) ou un objet (14) conçu comme conteneur, ce cadre de plancher pouvant coulisser dans la direction Y dans des rails de guidage (112) au moyen de galets, les unités d'entraînement (134) présentant pour le déplacement des objets (14) dans la direction X un cadre porteur (116) qui peut coulisser dans des glissières (110) dans la direction X au moyen de galets (112) et qui porte sur le dessous au moins deux traverses (124) réglables verticalement et munies d'éléments de préhension (132) pour saisir les objets (14) par en haut.

3. Dispositif selon la revendication 2, caractérisé en ce que le cadre porteur (116) porte deux traverses (124) dans la zone de ses deux faces extérieures courtes et au moins deux traverses supplémentaires (124) dans la zone centrale.

4. Dispositif selon la revendication 2 ou 3, caractérisé en ce que le cadre porteur (116) est équipé d'un dispositif de pesage qui peut être raccordé à une commande centrale.

5. Dispositif selon l'une des revendications précédentes, caractérisé en ce que le dispositif de levage (120) a un cadre (152) déplaçable verticalement dans une cage (142) et présentant deux glissières (110') parallèles l'une par rapport à l'autre, ce cadre étant destiné à recevoir un cadre porteur (116).

6. Dispositif selon l'une des revendications précédentes, caractérisé en ce qu'à l'extérieur du bloc d'entreposage (10) est prévue au moins une voie de circulation (92, 96) reliée au bloc d'entreposage (10), destinée au transport des objets (14).

7. Dispositif selon la revendication 6, caractérisé en ce que dans au moins une voie de circulation (92) est montée une plateforme tournante (104) pour les objets (14).

8. Dispositif selon la revendication 6 ou 7, caractérisé en ce qu'au moins une voie de circulation (92, 96) est reliée à un niveau tampon (88) et/ou une voie tampon (94) pour les objets (14).

9. Dispositif selon l'une des revendications précédentes, caractérisé en ce qu'aux dispositifs de levage (20) regroupés sur au moins une face extérieure (18) du bloc d'entreposage (10) est affectée une voie de déplacement (102) pour les objets (14).

10. Dispositif selon l'une des revendications précédentes, caractérisé en ce que le niveau le plus bas du bloc d'entreposage (10) sert de passage pour les camions.

11. Dispositif selon l'une des revendications précédentes, caractérisé en ce que dans la zone d'entrée (E) est disposé un enregistreur pour la reconnaissance des données des objets livrés (14), les données saisies étant stockées dans un ordinateur et traitées pour la récupération et la sortie de l'objet (14).

12. Procédé pour l'utilisation du dispositif selon l'une des revendications précédentes, **caractérisé en ce** qu'au moins en cas de remplissage complet du bloc d'entreposage (10), dans chacune des rangées qui se suivent dans la direction X une place de stationnement (12) est laissée libre de telle sorte que pour le prélèvement d'un objet (14) dans la direction X les objets situés devant lui dans la direction X sont déplacés exclusivement dans la direction Y vers les places de stationnement libres correspondantes qui s'y trouvent, ce qui provoque dans la direction des files (direction X) la formation d'un couloir libre (16), un dispositif de levage (20) étant prévu toutes les deux files pour assurer le transport vertical des objets (14).
